(19) Europäisches Patentamt / European Patent Office / Office européen des brevets

(11) **EP 4 118 737 B1**

(12) # FASCICULE DE BREVET EUROPEEN


(45) Date de publication et mention de la délivrance du brevet:
**11.06.2025 Bulletin 2025/24**

(21) Numéro de dépôt: **21716801.2**

(22) Date de dépôt: **11.03.2021**

(51) Classification Internationale des Brevets (IPC):
***H02K 55/02*** *(2006.01)* ***H02K 1/18*** *(2006.01)*
***H02K 16/02*** *(2006.01)* ***H02K 1/06*** *(2006.01)*
***H02K 19/20*** *(2006.01)* ***H02K 21/24*** *(2006.01)*
***H02K 21/04*** *(2006.01)*

(52) Classification Coopérative des Brevets (CPC):
**H02K 55/02; H02K 1/182; H02K 16/02;** H02K 1/06; H02K 19/20; H02K 21/04; H02K 21/24; Y02E 40/60

(86) Numéro de dépôt international:
**PCT/FR2021/050418**

(87) Numéro de publication internationale:
**WO 2021/181049 (16.09.2021 Gazette 2021/37)**


(54) **MACHINE ELECTRIQUE TOURNANTE A ELEMENTS SUPRACONDUCTEURS ET ENCEINTES CRYOGENIQUES**

ROTIERENDE ELEKTRISCHE MASCHINE MIT SUPRALEITENDEN ELEMENTEN UND KRYOGENEN UMHÜLLUNGEN

ROTATING ELECTRICAL MACHINE WITH SUPERCONDUCTING ELEMENTS AND CRYOGENIC ENCLOSURES


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2020 FR 2002484**

(43) Date de publication de la demande:
**18.01.2023 Bulletin 2023/03**



(73) Titulaires:
- **SAFRAN**
  **75015 Paris (FR)**
- **Université de Lorraine**
  **54000 Nancy (FR)**

(72) Inventeurs:
- **COLLE, Alexandre**
  **77550 MOISSY-CRAMAYEL (FR)**
- **AYAT, Sabrina Siham**
  **77550 MOISSY-CRAMAYEL (FR)**
- **BIAUJAUD, Rémy**
  **77550 MOISSY-CRAMAYEL (FR)**

(74) Mandataire: **Regimbeau**
**Parc d’affaires Cap Nord A**
**2, allée Marie Berhaut**
**CS 71104**
**35011 Rennes Cedex (FR)**



(56) Documents cités:
**EP-A1- 2 037 558** **EP-A2- 2 611 007**

- **DIFAN ZHOU ET AL: "Topical Review;An overview of rotating machine systems with high-temperature bulk superconductors;An overview of rotating machine systems with high-temperature bulk superconductors", SUPERCONDUCTOR SCIENCE AND TECHNOLOGY, IOP PUBLISHING, TECHNO HOUSE, BRISTOL, GB, vol. 25, no. 10, 8 August 2012 (2012-08-08), pages 103001, XP020229854, ISSN: 0953-2048, DOI: 10.1088/0953-2048/25/10/103001**



Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).





**(Cont. page suivante)**

- **COLLE ALEXANDRE ET AL: "Analytical Model for the Magnetic Field Distribution in a Flux Modulation Superconducting Machine", IEEE TRANSACTIONS ON MAGNETICS, IEEE SERVICE CENTER, NEW YORK, NY, US, vol. 55, no. 12, 12 December 2019 (2019-12-12), pages 1 - 9, XP011757687, ISSN: 0018-9464, [retrieved on 20191115], DOI: 10.1109/TMAG.2019.2935696**
- **MASSON P J ET AL: "Design of HTS Axial Flux Motor for Aircraft Propulsion", IEEE TRANSACTIONS ON APPLIED SUPERCONDUCTIVITY, IEEE SERVICE CENTER, LOS ALAMITOS, CA, US, vol. 17, no. 2, 2 June 2007 (2007-06-02), pages 1533 - 1536, XP011188386, ISSN: 1051-8223, DOI: 10.1109/TASC.2007.898120**

## Description

L'invention concerne une machine électrique tournante.

Un domaine d'application de l'invention concerne les génératrices d'électricité et les moteurs alimentés en électricité, devant équiper des moyens de transport, tels que des aéronefs, par exemple des avions ou des hélicoptères.

Le document DIFAN ZHOU ET AL, "Topical Review; An overview of rotating machine systems with high-temperature bulk superconductors;", SUPERCONDUCTOR SCIENCE AND TECHNOLOGY, IOP PUBLISHING, TECHNO HOUSE, BRISTOL, GB, vol 25, no. 10, 08 août 2012 (2012-08-08), page 103001, décrit une machine tournante selon le préambule de la revendication 1.

Le document COLLE ALEXANDRE ET AL, "Analytical Model for the Magnetic Field Distribution in a Flux Modulation Superconducting Machine", 12 décembre 2019 (2019-12-12), vol 55, no. 12, page 1-9, décrit une machine électrique tournante à éléments supraconducteurs, comportant un rotor et deux stators placés de part et d'autre du rotor.

Le document MASSON P J ET AL, "Design of HTS Axial Flux Motor for Aircraft Propulsion", IEEE TRANSACTIONS ON APPLIED SUPERCONDUCTIVITY, IEEE SERVICE CENTER, LOS ALAMITOS, CA, US, vol 17, no. 2, 02 juin 2007 (2007-06-02), page 1533-1536, décrit une machine électrique tournante à éléments supraconducteurs, ayant un empilement de stators et de rotors.

Le document EP2037558 concerne une machine électrique tournante comportant un rotor et deux stators placés de part et d'autre du rotor.

Le document EP2611007 concerne une machine électrique tournante comportant un rotor et deux stators placés de part et d'autre du rotor.

On connaît des machines tournantes, comprenant sur leur rotor des pastilles supraconductrices à barrières de flux à l'intérieur d'une bobine inductrice à flux axial, et un ou deux induits lors de leur fonctionnement en génératrice. La rotation des pastilles crée une modulation du flux magnétique dans le ou les induits entre une valeur minimale créée derrière les pastilles et une valeur maximale créée entre les pastilles, ce qui permet d'y générer une force électromotrice.

Toutefois, pour les applications nécessitant une grande densité d'énergie, il est nécessaire d'avoir une grande différence entre la valeur maximale et la valeur minimale du flux magnétique dans l'induit, l'amplitude de modulation étant directement proportionnelle à la force électromagnétique créée (loi de Faraday).

Ainsi, dans ces machines connues, il s'avère que la valeur minimale du flux magnétique dans l'induit est assez élevée.

L'invention vise à obtenir une machine électrique tournante à éléments supraconducteurs, qui permette de diminuer la valeur minimale du flux magnétique dans l'induit tout en ayant une grande valeur maximale du flux magnétique dans l'induit.

A cet effet, un premier objet de l'invention est une machine électrique tournante suivant la revendication 1.

A cet effet, un deuxième objet de l'invention est une machine électrique tournante suivant la revendication 2.

Les revendications 3 à 14 concernent des modes de réalisation de ces machines électriques tournantes.

Un troisième objet de l'invention est un aéronef, comportant un organe consommateur d'électricité ou générateur d'électricité et une machine électrique tournante tel que décrit ci-dessus, qui est connectée à un circuit de connexion à l'organe consommateur d'électricité ou générateur d'électricité pour permettre de l'alimenter en électricité ou de lui fournir de l'électricité.

L'invention sera mieux comprise à la lecture de la description qui va suivre, donnée uniquement à titre d'exemple non limitatif en référence aux figures des dessins annexés.

[Fig. 1] représente schématiquement en perspective une machine 1 suivant un premier mode de réalisation de l'invention.

[Fig. 2] représente schématiquement en perspective une machine 1 suivant un deuxième mode de réalisation de l'invention.

[Fig. 3] représente schématiquement en perspective une partie d'une machine 1 suivant un troisième mode de réalisation de l'invention.

[Fig. 4] est une vue en perspective dans deux plans de coupe des iso-lignes de flux magnétique autour et dans un élément supraconducteur de barrière de flux magnétique pouvant être utilisé dans une machine électrique tournante génératrice d'électricité suivant un mode de réalisation de l'invention.

[Fig. 5] représente schématiquement la valeur du champ magnétique pour un premier exemple d'une machine 1 suivant l'invention.

[Fig. 6] représente schématiquement la valeur du champ magnétique pour un deuxième exemple comparatif d'une machine 1 n'entrant pas dans le cadre de l'invention.

[Fig. 7] représente schématiquement des courbes de composante axiale de l'induction magnétique générée par une machine suivant le premier exemple de l'invention et suivant le deuxième exemple comparatif en un point situé entre un rotor et un induit.

[Fig. 8] représente schématiquement des courbes de composante axiale de l'induction magnétique générée par une machine suivant le premier exemple de l'invention et suivant le deuxième exemple comparatif en un point situé sur un bobinage d'induit.

[Fig. 9] représente schématiquement en perspective un solénoïde pouvant être utilisé dans la machine suivant l'invention.

[Fig. 10] représente l'évolution de l'induction en fonction du nombre d'empilements de rotors de la machine suivant l'invention.

[Fig. 11] représente schématiquement un bouchon de cryostat pouvant être utilisé dans la machine suivant l'invention.

[Fig. 12] représente schématiquement en vue de côté une machine qui n'est pas suivant l'invention.

[Fig. 13] représente schématiquement en vue de face une machine suivant la figure 12.

[Fig. 14] représente schématiquement en vue de côté une machine suivant le premier objet de l'invention.

[Fig. 15] représente schématiquement en vue de face une machine suivant la figure 14.

[Fig. 16] représente schématiquement en vue de côté une machine suivant le deuxième objet de l'invention.

[Fig. 17] représente schématiquement en vue de face une machine suivant la figure 16.

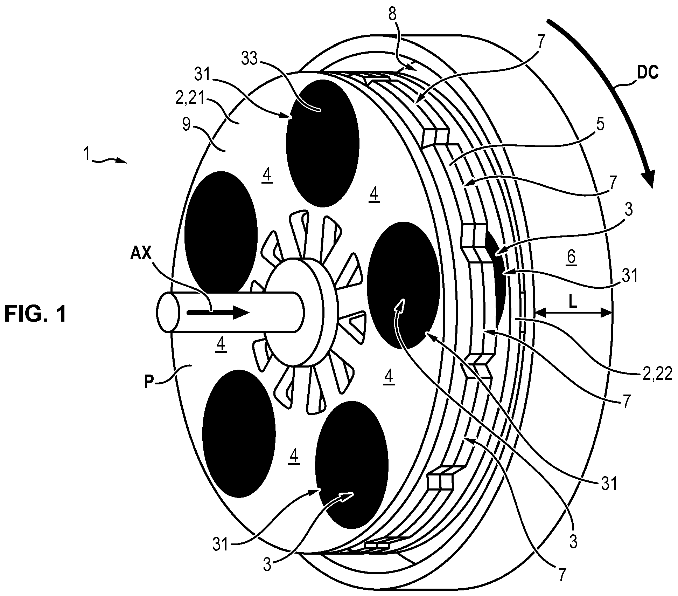

Aux figures 1, 2 et 3, dans une machine électrique 1 à barrières de flux comprenant des éléments supraconducteurs 3 de barrière de flux magnétique axial, la modulation du flux magnétique dépend directement de la position des écrans qui s'opposent au passage du flux par rapport aux bobinages 7 de l'induit 5 (fonctionnement générateur) ou de l'inducteur (fonctionnement moteur).

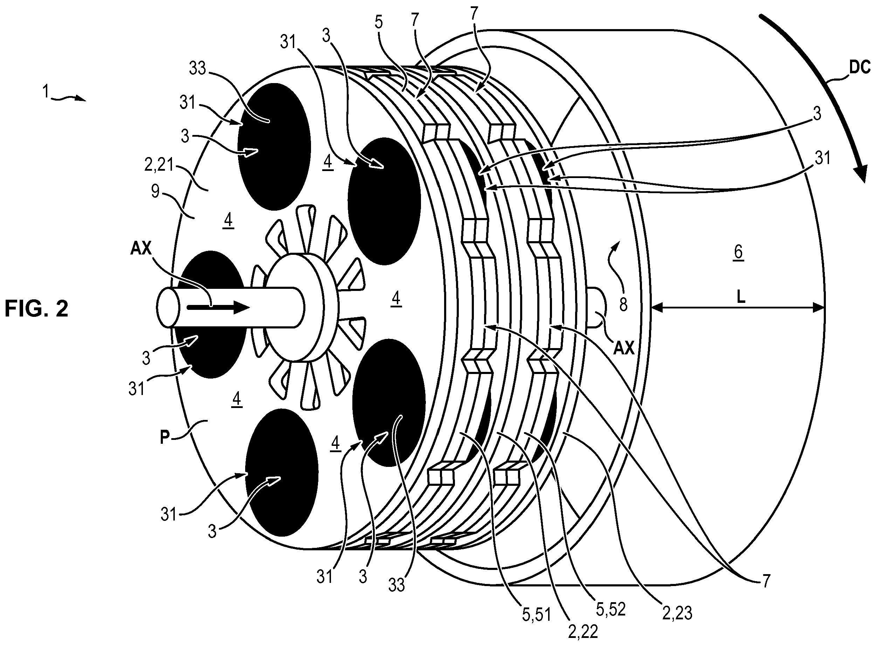

Aux figures 1, 2 et 3, la machine électrique tournante 1 est à flux axial et à barrières de flux. La machine 1 comporte plusieurs rotors désignés chacun d'une manière générale par la référence 2, pouvant être par exemple deux ou trois rotors 21, 22 et 23 aux figures 1 et 2, ou pouvant être autres. La machine électrique tournante 1 comporte ainsi un ou plusieurs premier rotor, désigné par la référence 21 aux figures 1, 2 et 3, et un ou plusieurs deuxième rotor, désigné par la référence 22 à la figure 1 et par les références 22 et 23 à la figure 2. Les termes axial et coaxial signifient s'étendant suivant l'axe AX de rotation. Les directions radiales sont situées dans des plans perpendiculaires à l'axe AX de rotation et partent de l'axe AX de rotation. Les rotors 2 sont solidaires entre eux sur un arbre ou axe AX de rotation. Chaque rotor 2 comporte un ensemble d'éléments supraconducteurs 3 de barrière de flux magnétique axial, qui sont répartis suivant la direction tangentielle DC autour de l'axe AX de rotation et qui se trouvent dans un plan perpendiculaire à l'axe AX de rotation. Entre les éléments supraconducteurs 3 de barrière de flux magnétique axial de chaque rotor 2, 21, 22, 23 se trouvent des zones 4 de passage de flux magnétique axial, qui sont réparties suivant la direction tangentielle DC autour de l'axe AX de rotation et qui se trouvent dans le plan perpendiculaire à l'axe AX de rotation. Les rotors 2, 21, 22, 23 sont espacés successivement l'un de l'autre le long de l'axe AX de rotation.

Dans un mode de réalisation, chaque élément supraconducteur 3 de barrière de flux magnétique axial d'un des rotors 2 (pouvant être par exemple le premier rotor 21) est coaxial au moins partiellement avec un autre élément supraconducteur 3 de barrière de flux magnétique axial du ou des autres rotors 2 (pouvant être par exemple le(s) deuxième(s) rotor 22, 23). Ainsi, au moins une partie de chaque élément supraconducteur 3 de barrière de flux magnétique axial d'un des rotors 2 (pouvant être par exemple le premier rotor 21) est coaxial avec au moins une partie d'un autre élément supraconducteur 3 de barrière de flux magnétique axial du ou des autres rotors 2 (pouvant être par exemple le(s) deuxième(s) rotor 22, 23).

Chaque zone 4 de passage de flux magnétique axial d'un des rotors 2 (pouvant être par exemple le premier rotor 21) est coaxiale au moins partiellement avec une autre zone 4 de passage de flux magnétique axial du ou des autres rotors 2 (pouvant être par exemple le(s) deuxième(s) rotor 22, 23). Ainsi, au moins une partie de chaque zone 4 de passage de flux magnétique axial d'un des rotors 2 (pouvant être par exemple le premier rotor 21) est coaxiale avec au moins une partie d'une autre zone 4 de passage de flux magnétique axial du ou des autres rotors 2 (pouvant être par exemple le(s) deuxième(s) rotor 22, 23).

La machine 1 comporte une (ou plusieurs) bobine inductrice 6 supraconductrice, qui est apte à induire un champ magnétique axial, qui est dirigé suivant l'axe AX de rotation et qui peut être continu. A cet effet, la bobine inductrice 6 supraconductrice peut comporter des bornes électriques extérieures (non représentées) servant à la connecter à une source de tension ou courant électrique continue, pour produire le champ magnétique axial. La bobine inductrice 6 supraconductrice est annulaire autour de l'axe AX de rotation suivant la direction tangentielle DC et entoure les éléments supraconducteurs 3 de barrière de flux magnétique axial des rotors 2 et le ou les induits 5. La bobine inductrice 6 supraconductrice crée un champ magnétique B intense, grâce à de grandes densités de courant circulant dans cette bobine 6, qui peuvent être par exemple 25 fois supérieures à la densité de courant du cuivre.

La machine 1 comporte un ou plusieurs induits (ou stators), qui sont désignés chacun d'une manière générale par la référence 5, tels que par exemple le ou les induits 51 et 52. Chaque induit 5 comporte des bobinages 7 d'induit, qui sont répartis suivant la direction tangentielle DC autour de l'axe AX de rotation.

La machine électrique tournante 1 peut fonctionner en mode générateur d'électricité sur le ou les induits 5 ou en mode moteur alimenté en électricité sur le ou les induits 5.

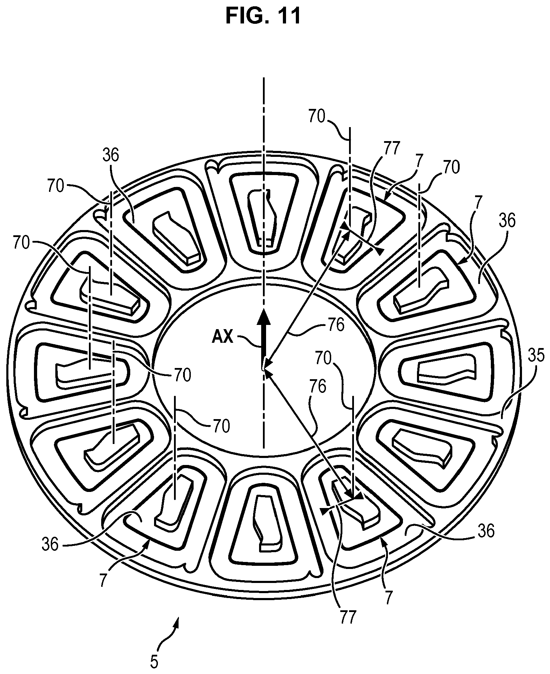

Suivant un mode de réalisation, chaque bobinage 7 d'induit peut former par exemple une boucle n'entourant pas l'axe AX de rotation et comporte un ou plusieurs conducteurs formant une boucle n'entourant pas l'axe AX de rotation. Ceci est illustré à titre d'exemple non limitatif à la figure 11. Chaque direction auxiliaire (géométrique) 70 autour de laquelle s'étend chaque bobinage 7 d'induit peut être sensiblement parallèle à l'axe AX de rotation ou avoir une composante parallèle à l'axe AX de rotation. Ainsi, cette direction auxiliaire 70 du bobinage (par exemple sensiblement parallèle à l'axe AX de rotation) est située à une première distance 76 non nulle de l'axe AX de rotation. Ainsi, le ou les conducteurs de la boucle formée par chaque bobinage 7 d'induit est situé à une deuxième distance 77 par rapport à sa direction auxiliaire 70, cette deuxième distance étant inférieure à la première distance 76 et pouvant être variable (ainsi que représenté à la figure 11) ou constante autour de sa direction auxiliaire 70.

Chaque bobinage 7 d'induit peut comporter d'autres bornes électriques extérieures (non représentées) servant à le connecter à un organe électrique non représenté. Dans le cas où la machine électrique tournante 1 fonctionne en mode générateur d'électricité, chaque bobinage 7 d'induit permet d'envoyer à l'organe récepteur électrique la tension électrique (force électromotrice) générée dans ce bobinage 7 d'induit par induction du champ magnétique axial variable se déplaçant dans la direction tangentielle DC du fait de la rotation des éléments 3 des rotors 2 autour de l'axe AX de rotation. La force électromotrice selon la loi de Lenz-Faraday est :

$$\varepsilon = -\frac{d\Phi}{dt}$$

où $\varepsilon$ est la force électromagnétique, $\Phi$ est le flux magnétique et t est le temps. On rapproche les éléments 3 par rapport aux bobinages 7 d'induit le long de l'axe AX pour maximiser la modulation du flux et donc la force électromotrice générée dans les bobinages 7 d'induit.

Les rotors 2 sont montés rotatifs sur l'axe AX de rotation par rapport au(x) induit(s) 5 et à la bobine inductrice 6, fixés l'un à l'autre sur un châssis non représenté.

Chaque induit 5 est positionné entre deux des rotors 2 dans la direction suivant l'axe AX de rotation.

Dans un mode de réalisation représenté à la figure 1, l'unique induit 5 est positionné entre le premier rotor 21 et le deuxième rotor 22.

Dans un mode de réalisation représenté à la figure 2, le premier induit 51 est positionné entre le premier rotor 21 et le deuxième rotor 22 et le deuxième induit 52 est positionné entre le deuxième rotor 22 et l'autre deuxième rotor 23.

D'une manière générale, la machine 1 a un premier nombre N de rotors 2 espacés successivement l'un de l'autre le long de l'axe AX de rotation, où N est un entier naturel prescrit, qui est supérieur ou égal à 2 ou à 3, et un deuxième nombre N-1 d'induits 5 positionnés successivement entre les N rotors 2 le long de l'axe AX de rotation. Les modes de réalisation correspondant à $N \geq 3$ sont appelés machine 1 à plusieurs empilements de rotors 2 ci-dessous.

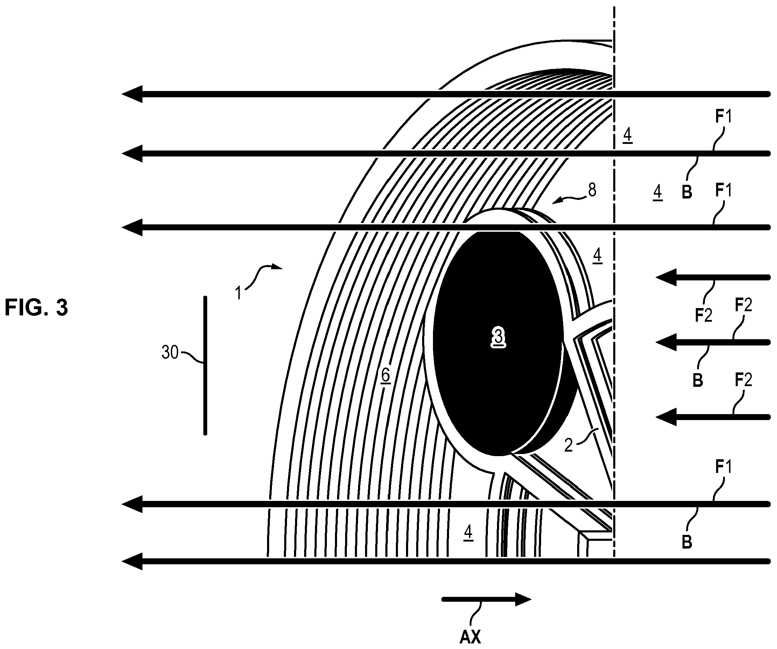

Ainsi que représenté à la figure 3, lorsque la machine 1 est en fonctionnement de génératrice, la bobine inductrice 6 supraconductrice génère un champ magnétique B (ainsi que représenté par les flèches longues F1 et les flèches courtes F2), qui est dirigé suivant l'axe AX de rotation dans l'espace intérieur 8 qu'elle entoure et dans lequel se trouvent les rotors 2 et le ou les induits 5. Chaque élément supraconducteur 3 de barrière de flux magnétique axial est configuré pour avoir une étendue déterminée dans le plan 30 perpendiculaire à l'axe AX de rotation et créer dans cette étendue un obstacle (ou écran) au passage du champ magnétique axial B, ainsi que symbolisé par les flèches courtes F2. Pour une température inférieure à leur température critique (la température critique étant par exemple inférieure à 100 K, ou notamment inférieure à 50 K), les matériaux supraconducteurs des éléments 3, de la bobine inductrice 6 et éventuellement des bobinages 7 d'induit ont une résistivité nulle, qui permet une circulation des courants continus sans pertes. Pour une température inférieure à leur température critique, les matériaux supraconducteurs des éléments 3 ont une réponse diamagnétique lors de l'élévation du champ magnétique B, c'est-à-dire ont un comportement de barrière de champ magnétique analogue à l'effet Meissner observé sous très faible champ.

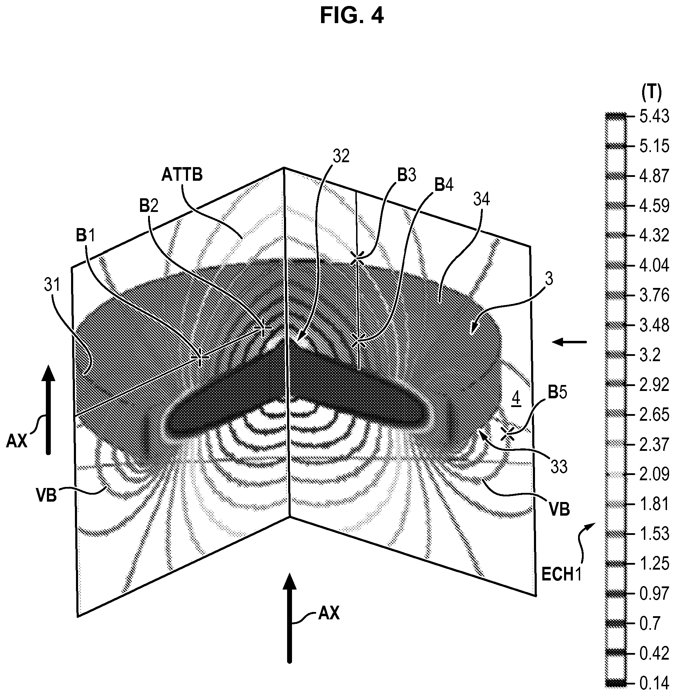

Cet écran ou cette barrière au passage du champ magnétique axial B se traduit par une forte atténuation ATTB de la valeur du champ magnétique devant et derrière l'élément 3 le long de l'axe AX, cette atténuation ATT étant d'autant plus forte (c'est-à-dire la valeur du champ magnétique B étant d'autant plus petite) que l'on va du bord extérieur 31 de l'élément 3 au centre 32 de l'élément 3 derrière la face arrière 33 de l'élément 3 et devant la face avant 34 de l'élément 3, ainsi que représenté à la figure 4, montrant les iso-lignes de flux magnétique autour et dans l'élément 3 et leur valeur exprimée en Tesla (T) en référence à la première échelle ECH1 de valeurs.

A cette figure 4, la pastille supraconductrice formant l'élément 3 est cylindrique circulaire autour de l'axe AX avec un rayon de 4 cm, est immergée dans le champ magnétique axial B constant de 3 T et a une densité de courant critique de 1000 A/mm2. La figure 4 a été obtenue par calcul par un modèle électromagnétique à éléments finis (H-formulation). La majorité du courant dans les pastilles supraconductrices 3 se développe sur une fine épaisseur de pénétration à partir de leur surface extérieure. L'épaisseur de pénétration dépend de l'intensité du champ magnétique dans lequel la pastille est immergée, ainsi que de ses propriétés électriques intrinsèques. On peut noter que l'épaisseur de pénétration est plus importante perpendiculairement à l'axe AX, que suivant l'axe AX. L'épaisseur suivant l'axe AX est proportionnelle à la distance par rapport au centre 32 de la pastille. D'une manière générale, l'épaisseur de pénétration de l'élément 3 ou de la pastille 3 suivant l'axe AX est relativement faible, pour ne pas avoir de performances dégradées.

On voit à la figure 4 que la valeur B1 du champ magnétique à proximité du bord extérieur 31 de l'élément 3 est supérieure à la valeur B2 du champ magnétique à proximité du centre 32 de l'élément 3 dans un même plan perpendiculaire à l'axe AX.

De même, cette atténuation ATTB de la valeur du champ magnétique est d'autant plus faible (c'est-à-dire la valeur du champ magnétique est d'autant plus grande) que l'on s'éloigne de l'élément 3 parallèlement à l'axe AX. On voit en effet à la figure 4 que la valeur B3 du champ magnétique loin de l'élément 3 est supérieure à la valeur B4 du champ magnétique à une distance plus proche de l'élément 3 dans une même direction parallèle à l'axe AX.

En revanche, les zones 4 de passage de flux magnétique axial laissent passer des valeurs VB du champ magnétique axial B, qui sont plus grandes que celles situées devant et derrière l'élément 3. On voit en effet à la figure 4 que la valeur B5 du champ magnétique transversalement à côté de l'élément 3 est supérieure à la valeur B2 du champ magnétique à proximité du centre 32 de l'élément 3 devant et derrière celui-ci.

La rotation des rotors 2 autour de l'axe AX génère à travers le ou les induits 5 un flux magnétique, qui varie selon qu'un élément supraconducteur 3 de barrière de flux magnétique axial des rotors 2 ou une zone 4 de passage de flux magnétique axial passe axialement en face du ou des induits 5.

Dans un mode de réalisation représenté aux figures 1 à 3, chaque élément supraconducteur 3 de barrière de flux magnétique axial d'un des rotors 2 (pouvant être par exemple le premier rotor 21) est aligné (c'est-à-dire est complètement coaxial) suivant l'axe AX de rotation avec un autre élément supraconducteur 3 de barrière de flux magnétique axial du ou des autres rotors 2 (pouvant être par exemple le(s) deuxième(s) rotor 22, 23), et chaque zone 4 de passage de flux magnétique axial d'un des rotors 2 (pouvant être par exemple le premier rotor 21) est alignée (c'est-à-dire est complètement coaxiale) suivant l'axe AX de rotation avec une autre zone 4 de passage de flux magnétique axial du ou des autres rotors 2 (pouvant être par exemple le(s) deuxième(s) rotor 22, 23).

Chaque élément 3 supraconducteur de barrière de flux magnétique axial peut avoir une étendue limitée à un premier secteur angulaire déterminé non nul autour de l'axe AX de rotation, et chaque zone 4 de passage de flux magnétique axial peut avoir une étendue limitée à un deuxième secteur angulaire déterminé non nul autour de l'axe AX de rotation. Par exemple, le premier secteur angulaire déterminé peut être égal au deuxième secteur angulaire déterminé.

Chaque bobinage 7 d'induit peut avoir une étendue limitée à un troisième secteur angulaire déterminé non nul autour de l'axe AX de rotation. Le troisième secteur angulaire déterminé peut être inférieur ou égal au premier secteur angulaire déterminé. Le troisième secteur angulaire déterminé peut être inférieur ou égal au deuxième secteur angulaire déterminé. Le nombre de bobinages 7 d'induit sur chaque induit 5 peut être supérieur ou égal à la somme du nombre d'éléments 3 supraconducteurs de barrière de flux magnétique axial et du nombre de zones 4 de passage de flux magnétique axial de chaque rotor 2, ainsi que représenté aux figures 1 et 2. Ainsi, dans chaque position de rotation des rotors 2 autour de l'axe AX de rotation, lorsque certains bobinages 7 d'induit sont axialement en face d'éléments 3 supraconducteurs de barrière de flux magnétique axial, d'autres bobinages 7 d'induit sont axialement en face de zones 4 de passage de flux magnétique axial. On obtient ainsi, lors de la rotation des rotors 2 autour de l'axe AX de rotation, des valeurs successivement très basses puis très hautes de flux magnétiques dans chaque bobinage 7 d'induit.

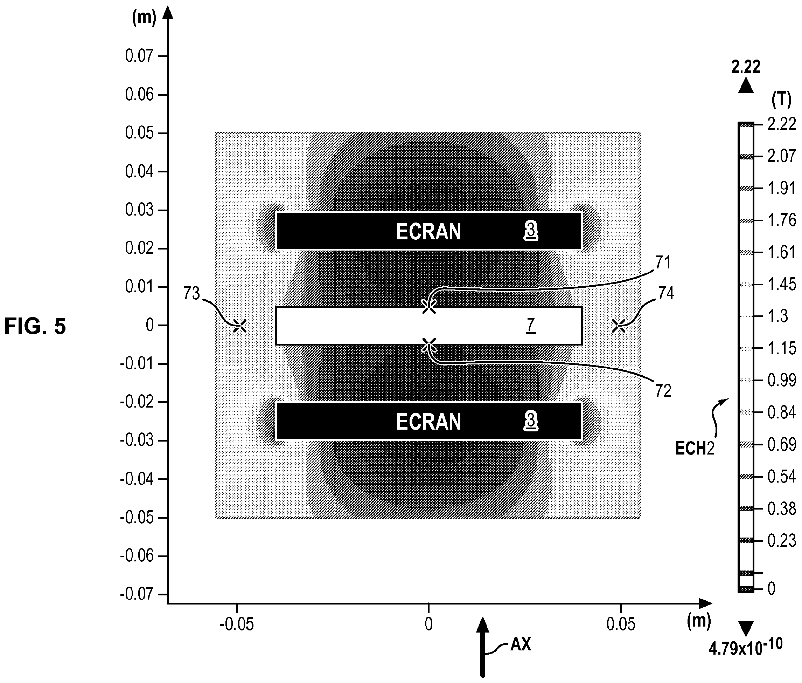

La figure 5 représente schématiquement une distribution calculée par la méthode des éléments finis pour la valeur du champ magnétique, en référence à la deuxième échelle ECH2 de valeurs en Tesla (T), et ce autour de deux éléments 3 supraconducteurs 3 de barrière de flux magnétique axial alignés axialement, lorsqu'un bobinage 7 d'induit se trouve entre ces deux éléments 3 et lorsqu'un champ axial externe constant est appliqué, et ce sans autres éléments 3 positionnés le long de l'axe AX de rotation, pour un premier exemple d'une machine 1 suivant le mode de réalisation de l'invention de la figure 1, ayant en outre les paramètres suivants : puissance nominale de 50 kW, couple nominal de 95 N.m, vitesse de rotation de 5000 tours par minute, température d'utilisation de 30 K, rayon des éléments 3 de 40 mm, poids total de 20 kg, poids de chaque rotor de 4 kg.

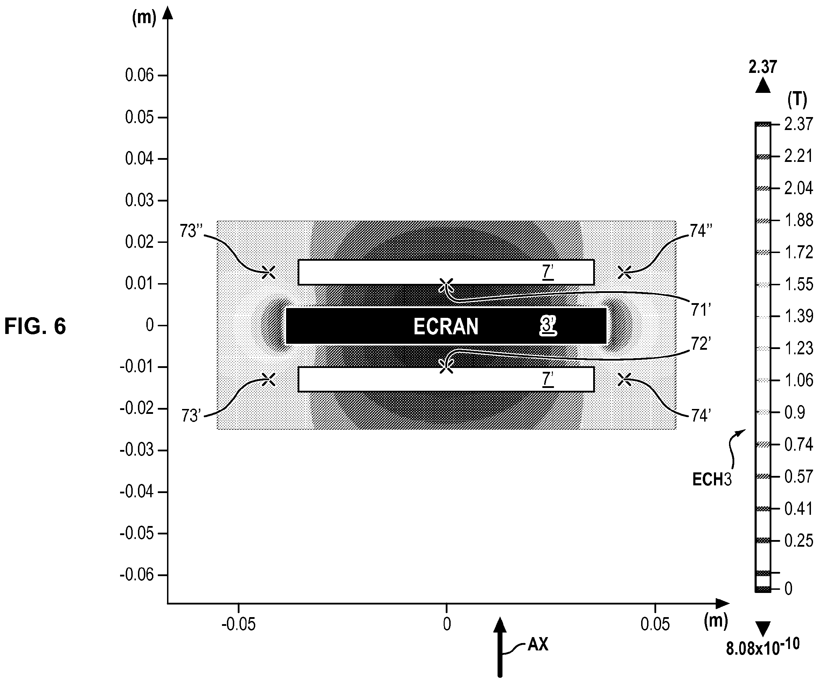

La figure 6 représente schématiquement une distribution calculée par la méthode des éléments finis pour la valeur du champ magnétique, en référence à la troisième échelle ECH3 de valeurs en Tesla (T), et ce autour de deux autres bobinages 7' d'induit alignés axialement, lorsqu'un élément supraconducteur 3' de barrière de flux magnétique axial identique à l'élément 3 de la figure 5 se trouve entre ces deux bobinages 7' d'induit lorsqu'un champ axial externe constant identique à celui de la figure 5 est appliqué, et ce sans autres bobinages 7' d'induit et sans autres élément supraconducteur 3' de barrière de flux magnétique axial, selon un deuxième exemple comparatif n'entrant pas dans le cadre de l'invention.

On voit à la figure 5 que, bien qu'à la figure 5 chaque élément supraconducteur 3 de barrière de flux magnétique axial est plus éloigné axialement du bobinage 7 d'induit que ne l'est chaque bobinage 7' d'induit par rapport à l'élément supraconducteur 3' de barrière de flux magnétique axial de la figure 6, la valeur (valeur minimale) du champ magnétique au centre 71, 72 des faces avant et arrière du bobinage 7 d'induit à la figure 5 est plus basse (0.25 T) que la valeur (valeur minimale) du champ magnétique au centre 71', 72' des faces avant et arrière des bobinages 7' d'induit à la figure 6 (0.45 T), tournées vers l'élément 3'. On voit également à la figure 5 que la valeur maximale du flux magnétique prise transversalement à côté de l'induit 5 (points 73 et 74 à la figure 5) est sensiblement identique à la valeur maximale du flux magnétique à côté des bobinage 7' d'induit (points 73', 73'', 74', 74'') de la figure 6.

On obtient donc grâce à l'invention une diminution de 44 % de la valeur minimale du flux magnétique dans l'induit 5 tout en ayant une grande valeur maximale du flux magnétique dans l'induit. Cela permet une augmentation du couple des rotors de 25 %. On obtient ainsi grâce à l'invention une augmentation de la modulation du flux magnétique dans le ou les induits 5, et donc une augmentation de la production d'électricité dans le ou les induits 5.

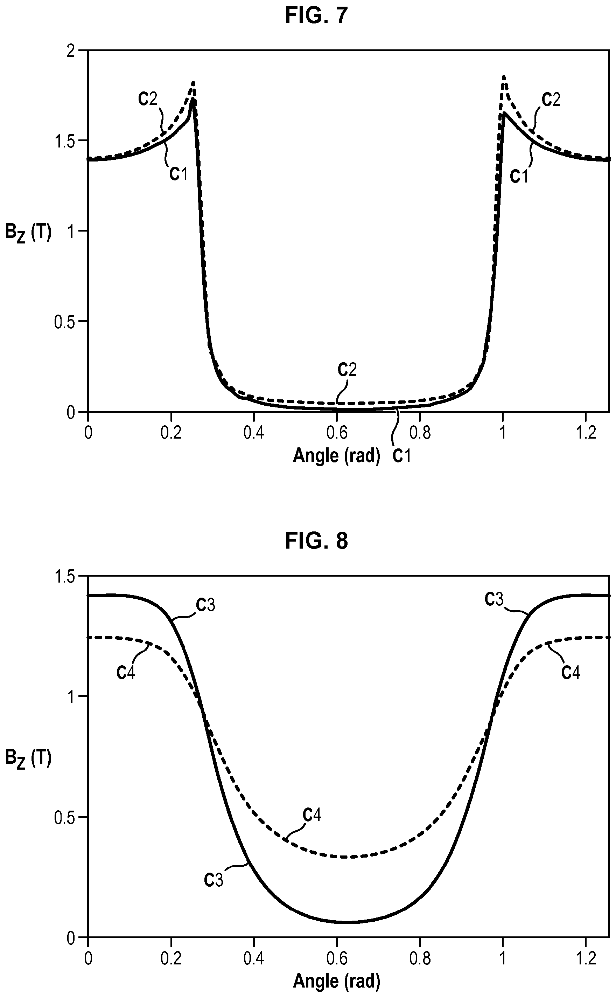

La figure 7 représente :

- la courbe C1 de la composante axiale $B_z$ (exprimée en T en ordonnées et calculée via le modèle électromagnétique tridimensionnel à éléments finis décrit précédemment) de l'induction magnétique générée par une machine 1 suivant le premier exemple précité suivant l'invention en un point situé à un rayon moyen des rotors 2 par rapport à l'axe AX (situé axialement en face des éléments 3 des rotors 2 et en face d'un des bobinages 7 d'induit lors de la rotation des rotors 2) et au centre de l'entrefer entre un des rotors 2 et un induit 5, en fonction de la position angulaire de rotation (exprimée en radian) des rotors 2 en abscisses, ainsi que
- la courbe C2 de la composante axiale $B_z$ (exprimée en T en ordonnées et calculée via le modèle électromagnétique tridimensionnel à éléments finis décrit précédemment) de l'induction magnétique, générée par une autre machine selon le deuxième exemple comparatif précité, n'entrant pas dans le cadre de l'invention, dont l'unique rotor est situé axialement entre deux uniques induits selon l'exemple comparatif précité, prise en un point situé à un rayon moyen du rotor par rapport à l'axe AX (situé axialement en face de pastilles supraconductrices de barrière de flux axial du rotor 2 et en face d'un des bobinages d'induit lors de la rotation du rotor 2) et au centre de l'entrefer entre le rotor et un des induits, en fonction de la position angulaire de rotation (exprimée en radian) de son rotor en abscisses.

On voit à la figure 7 qu'axialement en face des éléments supraconducteurs 3 de barrière de flux magnétique axial, le flux magnétique est réduit de 95% entre sa valeur maximale et sa valeur minimale sur la courbe C2 pour la machine comparative, alors que le flux magnétique est réduit de 99% entre sa valeur maximale et sa valeur minimale sur la courbe C1 pour la machine suivant l'invention.

La figure 8 représente :

- la courbe C3 de la composante axiale $B_z$ (exprimée en T en ordonnées et calculée via le modèle électromagnétique tridimensionnel à éléments finis décrit précédemment) de l'induction magnétique générée par une machine 1 suivant le premier exemple précité suivant l'invention en un point situé à un rayon moyen des rotors 2 par rapport à l'axe A et sur les spires d'un des bobinages 7 d'induit les plus éloignées des éléments 3 lors de la rotation des rotors, en fonction de la position angulaire de rotation (exprimée en radian) des rotors 2 en abscisses, ainsi que
- la courbe C4 de la composante axiale $B_z$ (exprimée en T en ordonnées et calculée via le modèle électromagnétique tridimensionnel à éléments finis décrit précédemment) de l'induction magnétique, générée par le deuxième exemple comparatif précité d'une autre machine comparative en un point situé à un rayon moyen des rotors 2 par rapport à l'axe AX et sur les spires d'un des bobinages 7 d'induit les plus éloignées de ses éléments, en fonction de la position angulaire de rotation (exprimée en radian) de son rotor en abscisses.

On voit à la figure 8 que sur les bobinages 7 d'induit, le flux magnétique varie entre la valeur maximale de 1.4 T et la valeur minimale de 0.06 T sur la courbe C3 pour la machine suivant l'invention, soit une variation de 1.34 T qui est de 45 % supérieure à la variation de 0.92 T entre la valeur maximale de 1.26 T et la valeur minimale de 0.34 T sur la courbe C4 pour la machine comparative. Par conséquent, l'invention permet d'augmenter l'effet d'écran de 45 % et d'augmenter le couple de 25% par rapport à la machine comparative ayant une configuration suivant l'état de la technique. Il s'ensuit également une augmentation de la puissance de la machine 1 suivant l'invention, tout en permettant d'avoir une enceinte cryogénique de refroidissement identique.

Dans un mode de réalisation représenté aux figures 1 à 4, un ou plusieurs ou tous les éléments supraconducteurs 3 de barrière de flux magnétique axial comprend ou est formé d'une pastille pleine de barrière de flux magnétique axial en un matériau supraconducteur, dont l'étendue est délimitée par son bord extérieur 31. La pastille pleine de barrière de flux magnétique axial 3 peut être cylindrique autour d'une direction parallèle à l'axe AX de rotation, par exemple cylindrique circulaire.

Dans un autre mode de réalisation non représenté, un ou plusieurs ou tous les éléments supraconducteurs 3 de barrière de flux magnétique axial comprend ou est formé d'une ou plusieurs boucles de barrière de flux magnétique axial en un matériau supraconducteur, dont l'étendue est délimitée par son bord extérieur.

Sur chaque rotor 2, les éléments supraconducteurs 3 de barrière de flux magnétique axial sont fixés dans des ouvertures traversantes d'un support 9 électriquement isolant faisant partie du rotor 2. Ce support 9 est fixé à l'axe AX de rotation et peut être formé d'une plaque plane, par exemple circulaire autour de l'axe AX. Dans un mode de réalisation représenté aux figures 1 et 2, un ou plusieurs ou toutes les zones 4 de passage de flux magnétique axial comprend ou est formée d'une partie du support 9 en le matériau isolant électriquement isolant. Dans un mode de réalisation représenté à la figure 3, un ou plusieurs ou toutes les zones 4 de passage de flux magnétique axial comprend ou est formée d'une autre ouverture béante du support 9.

Dans un mode de réalisation représenté aux figures 1 à 17, un ou plusieurs ou tous les bobinages 7 d'induit comporte ou est formé d'un bobinage supraconducteur (premier cas).

Dans un autre mode de réalisation représenté aux figures 1 à 17, un ou plusieurs ou tous les bobinages 7 d'induit comporte ou est formé d'un bobinage conducteur et non supraconducteur, pouvant être en cuivre ou autres (deuxième cas).

Dans un mode de réalisation représenté aux figures 1 à 3, 14 et 16, la bobine inductrice 6 supraconductrice possède une étendue axiale L, qui entoure à la fois les rotors 2 (et donc entoure également les éléments supraconducteurs 3 de barrière de flux magnétique axial), et le ou les induit 5 suivant la direction tangentielle DC autour de l'axe AX de rotation. Cela réduit davantage le champ magnétique démagnétisant et augmente le niveau d'induction. Il peut être prévu une seule bobine inductrice 6 supraconductrice.

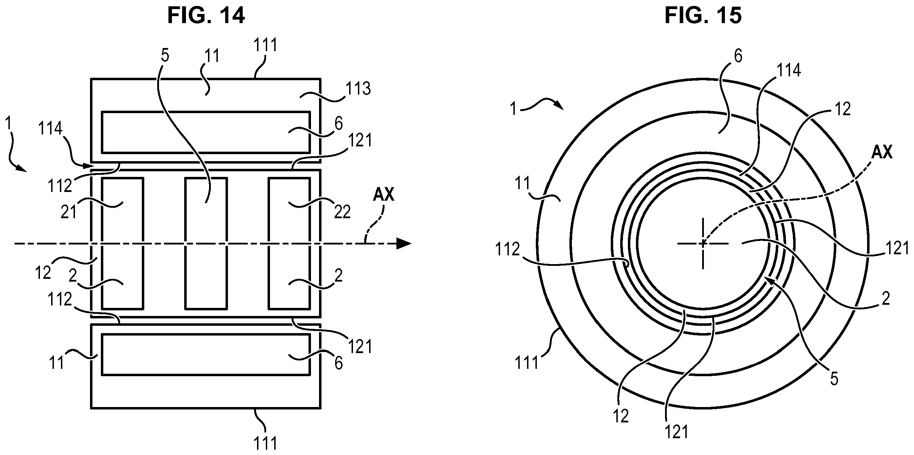

Les éléments supraconducteurs 3 de barrière de flux magnétique axial peuvent être refroidis par un premier dispositif de refroidissement, non représenté, à circulation de fluide cryogénique, pouvant être par exemple de l'hélium, notamment dans les modes de réalisation des figures 14 à 17, décrits ci-dessous. La bobine inductrice 6 supraconductrice peut être refroidie par un deuxième dispositif de refroidissement, non représenté, à circulation de fluide cryogénique, pouvant être par exemple de l'hélium, notamment dans les modes de réalisation des figures 14 à 17, décrits ci-dessous. Le refroidissement de la bobine inductrice supraconductrice 6 peut être réalisé par un même fluide circulant en série à proximité de la bobine inductrice supraconductrice 6 et des éléments supraconducteurs 3 de barrière de flux magnétique axial des rotors 2, notamment dans les modes de réalisation des figures 14 à 17, décrits ci-dessous. Lorsque de plus les éléments supraconducteurs 3 de barrière de flux magnétique axial sont des pastilles supraconductrices, ces éléments supraconducteurs 3 ont une tolérance à la température plus élevée que la bobine supraconductrice 6, et le fluide (hélium) refroidit la bobine inductrice supraconductrice 6, avant les pastilles supraconductrices 3, notamment dans les modes de réalisation des figures 14 à 17, décrits ci-dessous et dans les premier et deuxième cas décrits ci-dessous. Les rotors 2 peuvent être placés à l'intérieur d'une enceinte cryogénique sous vide, par exemple selon l'un des modes de réalisation décrits ci-dessous en référence aux figures 14 à 17. Le vide permet d'assurer l'absence d'échanges de chaleur par convection entre les surfaces de l'enceinte et les rotors 2, et donc une isolation thermique, notamment dans les modes de réalisation des figures 14 à 17, décrits ci-dessous.

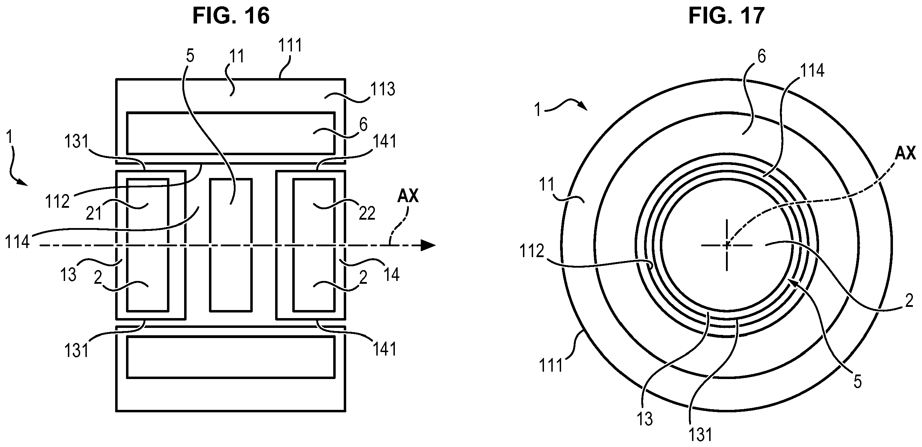

Les enceintes cryogéniques de refroidissement des modes de réalisation décrits ci-dessous peuvent contenir le fluide de refroidissement. Ce fluide de refroidissement peut être par exemple de l'hélium, ou autre. Le refroidissement des éléments supraconducteurs 3 de barrière de flux magnétique axial en rotation peut être effectué grâce à un collecteur tournant faisant circuler l'hélium à l'intérieur de canaux de cuivre en contact avec ces éléments 3, notamment dans l'enceinte 12 cryogénique de refroidissement du mode de réalisation des figures 14 et 15, dans l'enceinte 13 cryogénique de refroidissement du mode de réalisation des figures 16 et 17 et dans l'enceinte 14 cryogénique de refroidissement du mode de réalisation des figures 16 et 17, décrits ci-dessous et dans la quatrième enceinte cryogénique de refroidissement décrite ci-dessous. Les enceintes cryogéniques de refroidissement des modes de réalisation décrits ci-dessous peuvent fonctionner à des températures différentes l'une de l'autre.

Suivant un premier cas de refroidissement, les enceintes cryogéniques 11, 12, 13, 14 de refroidissement des modes de réalisation des figures 14 à 17 peuvent être agencées et/ou reliées, du point de vue de la circulation du fluide de refroidissement, pour que le fluide de refroidissement refroidisse d'abord la bobine inductrice supraconductrice 6, puis les bobinages 7 d'induit de l'induit 5, et ensuite les rotors 2, 21, 22 et/ou 23 (éléments supraconducteurs 3 de barrière de flux magnétique axial), dans le premier cas où les bobinages 7 d'induit comportent un (ou plusieurs) bobinage 7 d'induit supraconducteur. L'ordre de refroidissement des enceintes est de la plus froide vers la plus chaude, du fait que le fluide de refroidissement se réchauffera lors du refroidissement.

Suivant un deuxième cas de refroidissement, les enceintes cryogéniques 11, 12, 13, 14 de refroidissement des modes de réalisation des figures 14 à 17 peuvent être agencées et/ou reliées, du point de vue de la circulation du fluide de refroidissement, pour que le fluide de refroidissement refroidisse d'abord la bobine inductrice supraconductrice 6, puis les rotors 2, 21, 22 et/ou 23 (éléments supraconducteurs 3 de barrière de flux magnétique axial), et ensuite les bobinages 7 d'induit de l'induit 5, dans le deuxième cas où les bobinages 7 d'induit sont formés de bobinages 7 conducteurs, non supraconducteurs. L'ordre de refroidissement des enceintes est de la plus froide vers la plus chaude, du fait que le fluide de refroidissement se réchauffera lors du refroidissement.

Dans le deuxième cas, les bobinages 7 d'induit formés de bobinages 7 conducteurs, non supraconducteurs, de l'induit 5 fonctionneront typiquement à des températures plus élevées (pouvant être de l'ordre de 100 K) que dans le premier cas des bobinages 7 d'induit comportant un (ou plusieurs) bobinage 7 d'induit supraconducteur, qui devront être refroidis en-dessous de leur température critique <100K, par exemple à une température pouvant être de 70K ou de 50K). La comparaison effectuée précédemment concernant l'amélioration du couple pour une configuration selon le deuxième exemple comparatif comparée à une configuration selon le premier exemple suivant l'invention s'accompagne d'une amélioration de la puissance machine de la machine, qui est proportionnelle uniquement pour une machine complètement supraconductrice. Dans ce cas, la taille de l'enceinte cryogénique reste relativement la même.

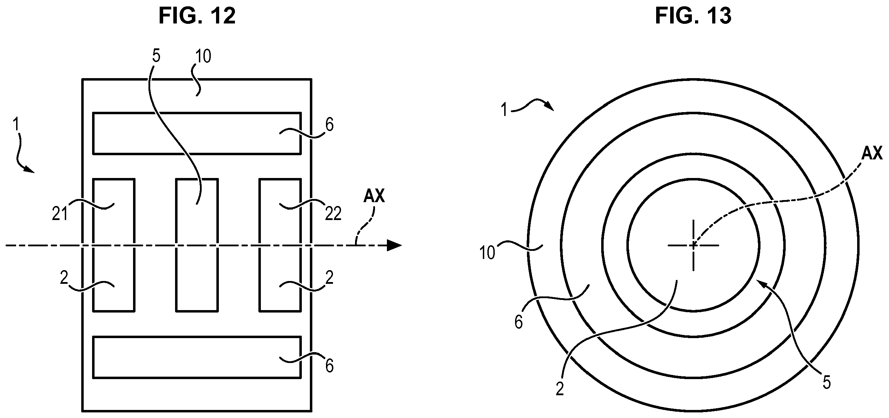

Dans le cas des figures 12 et 13, la machine 1 comporte une enceinte 10 cryogénique de refroidissement, à l'intérieur de laquelle sont placés les rotors 2, le ou les induits 5 et la bobine inductrice 6 supraconductrice, dans le cas où les bobinages 7 d'induit sont également supraconducteurs.

Dans un mode de réalisation représenté aux figures 14 et 15, la bobine inductrice 6 supraconductrice est placée dans une première enceinte cryogénique 11 de refroidissement en forme de bague annulaire autour de l'axe AX de rotation. La bobine inductrice 6 supraconductrice est située dans un premier espace 113 de logement de l'enceinte 13, situé entre une première paroi extérieure 111 de la première enceinte 11 et une deuxième paroi intérieure annulaire 112 de la première enceinte 11, qui la délimitent radialement. Ce premier espace 113 de logement est distinct d'un deuxième espace 114 situé radialement à l'intérieur de la deuxième paroi intérieure annulaire 11. Dans ce deuxième espace 114 intérieur est placée une deuxième enceinte cryogénique 12 de refroidissement, dans laquelle se trouvent les rotors 2 et le ou les induits 5 dans le cas où les bobinages 7 d'induit sont également supraconducteurs. La deuxième enceinte cryogénique 12 de refroidissement a une forme cylindrique circulaire autour de l'axe AX de rotation et est délimitée radialement par une troisième paroi extérieure 121 située à l'intérieur de la deuxième paroi intérieure annulaire 112. Le fait d'avoir plusieurs enceintes permet un refroidissement plus efficace : on refroidit chaque enceinte à la température requise par les parties situées à l'intérieur des enceintes.

Suivant un mode de réalisation, la première enceinte cryogénique 11 de refroidissement du mode de réalisation des figures 14 et 15 comporte une (ou plusieurs) première entrée d'introduction du fluide de refroidissement raccordée à une source lui envoyant le fluide de refroidissement, et une (ou plusieurs) première sortie d'éjection du fluide de refroidissement. La première sortie d'éjection du fluide de refroidissement ou l'une (ou plusieurs des ou toutes les) des premières sorties d'éjection du fluide de refroidissement est raccordée à une (ou plusieurs) deuxième entrée d'introduction du fluide de refroidissement de la deuxième enceinte cryogénique 12 de refroidissement. La deuxième enceinte cryogénique 12 de refroidissement comporte une (ou plusieurs) deuxième sortie d'éjection du fluide de refroidissement.

La (ou l'une des ou plusieurs ou toutes les) deuxième entrée d'introduction du fluide de refroidissement de la deuxième enceinte cryogénique 12 de refroidissement peut être plus proche du (ou des) induit 5 que des rotors 2, 21, 22 et/ou 23, dans le premier cas où les bobinages 7 d'induit comportent un (ou plusieurs) bobinage 7 d'induit supraconducteur, afin de mettre en œuvre le premier cas de refroidissement mentionné ci-dessus. La (ou l'une des ou plusieurs ou toutes les) deuxième sortie d'éjection du fluide de refroidissement peut être plus proche des rotors 2, 21, 22 et/ou 23 que du (ou des) induit 5, dans le premier cas où les bobinages 7 d'induit comportent un (ou plusieurs) bobinage 7 d'induit supraconducteur, afin de mettre en œuvre le premier cas de refroidissement mentionné ci-dessus.

La (ou l'une des ou plusieurs ou toutes les) deuxième entrée d'introduction du fluide de refroidissement de la deuxième enceinte cryogénique 12 de refroidissement peut être plus proche des rotors 2, 21, 22 et/ou 23 que du (ou des) induit 5, dans le deuxième cas où les bobinages 7 d'induit sont formés de bobinages 7 conducteurs, non supraconducteurs, afin de mettre en œuvre le deuxième cas de refroidissement mentionné ci-dessus. La (ou l'une des ou plusieurs ou toutes les) deuxième sortie d'éjection du fluide de refroidissement peut être plus proche de (ou des) l'induit 5 que des rotors 2, 21, 22 et/ou 23, dans le deuxième cas où les bobinages 7 d'induit sont formés de bobinages 7 conducteurs, non supraconducteurs, afin de mettre en œuvre le deuxième cas de refroidissement mentionné ci-dessus.

Dans un mode de réalisation représenté aux figures 16 et 17, la première enceinte 11 est analogue à celle du mode de réalisation décrit ci-dessus en référence aux figures 14 et 15. Dans le deuxième espace 114 intérieur est placée une deuxième enceinte cryogénique 13 de refroidissement, dans laquelle est placé le premier rotor 21 sans l'induit 5, et une troisième enceinte cryogénique 14 de refroidissement, dans laquelle est placé le deuxième rotor 22 sans l'induit 5, dans le deuxième cas où les bobinages 7 d'induit ne sont pas supraconducteurs. La deuxième enceinte cryogénique 13 de refroidissement a une forme cylindrique circulaire autour de l'axe AX de rotation et est délimitée radialement par une troisième paroi extérieure 131 située à l'intérieur de la deuxième paroi intérieure annulaire 112. La troisième enceinte cryogénique 14 de refroidissement a une forme cylindrique circulaire autour de l'axe AX de rotation et est délimitée radialement par une quatrième paroi extérieure 141 située à l'intérieur de la deuxième paroi intérieure annulaire 112. La troisième enceinte cryogénique 14 de refroidissement est distincte et située axialement à distance de la deuxième enceinte cryogénique 13 de refroidissement. Dans le deuxième espace intérieur 114 et entre la deuxième enceinte cryogénique 13 de refroidissement et la troisième enceinte cryogénique 14 de refroidissement se trouve l'induit 5. Par exemple, une enceinte cryogénique 13 ou 14 est prévue autour de chaque rotor 2 de la machine 1. La machine 1 peut ainsi comporter N enceintes cryogéniques 13, 14 de refroidissement, dans lesquelles sont placées respectivement les N rotors 2. Les bobinages 7 d'induit peuvent être insérés entre les surfaces extérieures transversales de deux enceintes 13 et 14 différentes, par exemple selon le mode de réalisation décrit ci-dessous en référence à la figure 11. Dans le premier cas où les bobinages 7 d'induit comportent un (ou plusieurs) bobinage 7 d'induit supraconducteur, chaque induit 5 est placé dans une quatrième enceinte cryogénique de refroidissement, qui est située entre la deuxième enceinte cryogénique 13 de refroidissement et la troisième enceinte cryogénique 14 de refroidissement, qui a une forme cylindrique circulaire autour de l'axe AX de rotation et qui est délimitée radialement par une quatrième paroi extérieure située à l'intérieur de la deuxième paroi intérieure annulaire 112. Le fait d'avoir plusieurs enceintes permet un refroidissement plus efficace : on refroidit chaque enceinte à la température requise par les parties situées à l'intérieur des enceintes.

Suivant un mode de réalisation, la première enceinte cryogénique 11 de refroidissement du mode de réalisation des figures 16 et 17 comporte une (ou plusieurs) première entrée d'introduction du fluide de refroidissement raccordée à une source lui envoyant le fluide de refroidissement, et une (ou plusieurs) première sortie d'éjection du fluide de refroidissement. La deuxième enceinte cryogénique 13 de refroidissement comporte une (ou plusieurs) deuxième entrée d'introduction du fluide de refroidissement et une (ou plusieurs) deuxième sortie d'éjection du fluide de refroidissement. La troisième enceinte cryogénique 14 de refroidissement comporte une (ou plusieurs) troisième entrée d'introduction du fluide de refroidissement et une (ou plusieurs) troisième sortie d'éjection du fluide de refroidissement. Dans le premier cas, la quatrième enceinte cryogénique de refroidissement comporte une (ou plusieurs) quatrième entrée d'introduction du fluide de refroidissement et une (ou plusieurs) quatrième sortie d'éjection du fluide de refroidissement.

Dans le premier cas où les bobinages 7 d'induit comportent un (ou plusieurs) bobinage 7 d'induit supraconducteur, afin de mettre en œuvre le premier cas de refroidissement mentionné ci-dessus, la (ou l'une des ou plusieurs ou toutes les) première sortie d'éjection du fluide de refroidissement de la première enceinte cryogénique 11 de refroidissement de la bobine 6 inductrice supraconductrice est raccordée à la (ou à l'une des ou à plusieurs des ou à toutes les) quatrième entrée d'introduction du fluide de refroidissement de la quatrième enceinte cryogénique de refroidissement (induit 5). La (ou l'une des ou plusieurs ou toutes les) quatrième sortie d'éjection du fluide de refroidissement de la quatrième enceinte cryogénique de refroidissement (induit 5) est raccordée à la (ou à plusieurs des ou à toutes les) deuxième entrée d'introduction du fluide de refroidissement de la deuxième enceinte cryogénique 13 de refroidissement et à la (ou l'une des ou plusieurs des ou toutes les) troisième entrée d'introduction du fluide de refroidissement de la troisième enceinte cryogénique 14 de refroidissement, dans le premier cas où les bobinages 7 d'induit comportent un (ou plusieurs) bobinage 7 d'induit supraconducteur, afin de mettre en œuvre le premier cas de refroidissement mentionné ci-dessus.

Dans le deuxième cas où les bobinages 7 d'induit sont formés de bobinages 7 conducteurs, non supraconducteurs, afin de mettre en œuvre le deuxième cas de refroidissement mentionné ci-dessus, la (ou l'une des ou plusieurs des ou toutes les) première sortie d'éjection du fluide de refroidissement est raccordée à la (ou à l'une des ou à plusieurs des ou à toutes les) deuxième entrée d'introduction du fluide de refroidissement de la deuxième enceinte cryogénique 13 de refroidissement et à la (ou à l'une des ou à plusieurs des ou à toutes les) troisième entrée d'introduction du fluide de refroidissement de la troisième enceinte cryogénique 14 de refroidissement. Dans le deuxième cas, des dispositifs de refroidissement à air forcé ou liquide peuvent être envisagés pour refroidir les bobinages 7 d'induit. Par exemple, une couronne sur les périphéries extérieures et/ou intérieures radiales des bobinages 7 d'induit se prête bien à un dispositif de refroidissement par circulation d'un liquide dans le deuxième cas.

Dans le mode de réalisation de la figure 11, les bobinages 7 d'induit d'un induit 5 peuvent être fixés sur un bouchon 35 de cryostat (par exemple en céramique) de l'enceinte 13 et/ou 14 en forme d'anneau autour de l'axe AX, dont une face transversale comporte des encoches 36 dans lesquelles sont montés respectivement les bobinages 7 d'induit. Ce système peut notamment permettre de servir de support mécanique pour les bobines en l'absence de culasse magnétique (machine sans fer). Des canaux et ailettes peuvent être intégrés au bouchon 34 de cryostat afin d'améliorer le refroidissement.

La machine 1 suivant l'invention, et particulièrement celle selon le mode de réalisation décrit ci-dessus à $N \geq 3$ rotors et $N-1 \geq 2$ induits en référence à la figure 2, dit à plusieurs empilements de rotors 2, se prête bien à des machines de très forte puissance ayant des contraintes de volume (par exemple, un rayon extérieur maximum), ou à des topologies entièrement supraconductrices, car les induits et rotors peuvent tous être placés à l'intérieur d'une enceinte cryogénique unique.

Dans la machine électrique 1 à flux axial, l'ajout d'un empilement selon la figure 2 augmente la puissance et également la masse. La puissance massique de la machine est augmentée. En effet, l'empilement de rotors 2 entraine une augmentation de la longueur L de la bobine inductrice 6 (fonctionnement en mode générateur). Cet allongement de la bobine 6 a pour conséquence la réduction du champ magnétique démagnétisant $H_d$, ce qui augmente le niveau de l'induction au cœur de la machine 1 et donc sa puissance massique.

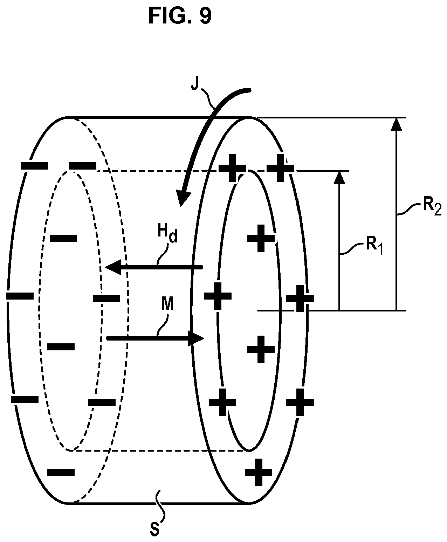

L'induction magnétique créée par un solénoïde S parcouru par une densité de courant J peut se résoudre par une approche ampérienne ou colombienne, en référence à la figure 9. Le champ démagnétisant est typiquement coulombien, les charges magnétiques surfaciques s'écrivent :

$$\sigma_s(r) = \mu_0 J(R_2 - R_1) \; pour \; 0 < r < R_1$$

$$\sigma_s(r) = \mu_0 J(R_2 - r) \; pour \; R_1 < r < R_2$$

$$\sigma_s(r) = 0 \; pour \; r > R_2$$

Pour une distribution de charges réparties sur une surface Σ, le champ magnétique démagnétisant $H_d$ est donné en un point M par:

$$H_d(M) = \iint_{\Sigma} \frac{\sigma_s}{4\pi\varepsilon_0 PM} d^2S$$

où P est un point sur la surface Σ. En l'absence de source de champ magnétique extérieur, le vecteur champ magnétique H total s'écrit simplement par :

$$H = H_d$$

Enfin, l'expression du vecteur de l'induction B est :

$$\mathbf{B} = \mu_0(\mathbf{H} + \mathbf{M}) = \mu_0(\mathbf{H_d} + \mathbf{M})$$

Vectoriellement le champ magnétique démagnétisant $H_d$ est opposé à la magnétisation M du solénoïde, ce qui explique le caractère démagnétisant. En augmentant la longueur L de la bobine supraconductrice 6, la distance PM de l'expression ci-dessus du champ magnétique démagnétisant $H_d$ grandit et diminue le champ magnétique démagnétisant $H_d$. Ainsi au vu de l'expression de B, l'induction totale augmente et donc l'ensemble couple/puissance de la machine également. Un coefficient k peut être utilisé pour représenter l'évolution de l'induction en fonction du nombre de rotors 2 dans la machine 1 suivant l'invention, tel que :

$$k = \frac{B_{zN}}{B_{z1}}$$

où $B_{z1}$ est l'induction pour une machine à flux axial comprenant un seul rotor et un seul induit et $B_{zN}$ l'induction d'une machine 1 suivant l'invention comprenant N rotors. L'induction est proportionnelle à ce coefficient k. L'augmentation du couple et de la puissance de la machine 1 est également proportionnelle à ce coefficient k.

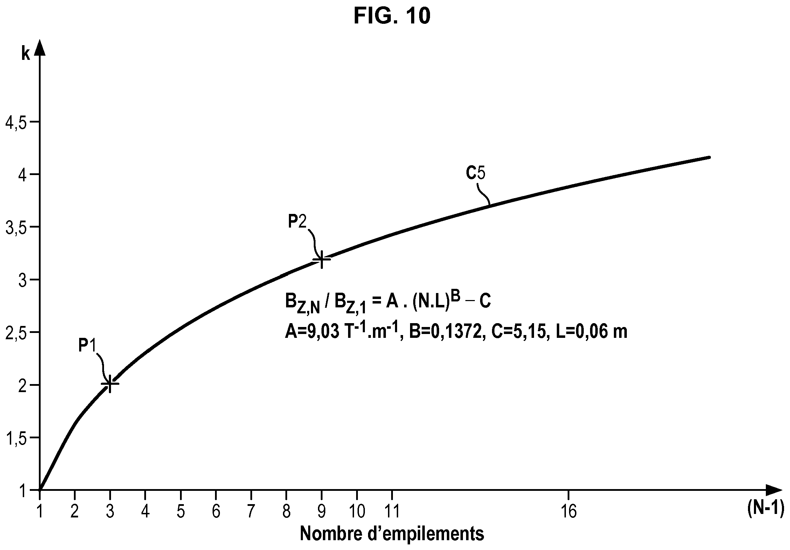

La figure 10 représente l'évolution du coefficient k (et donc de l'induction) en fonction du nombre (N-1) d'empilements de rotors 2. Cette courbe C5 a été obtenue par l'interpolation de résultats obtenus pour des calculs à éléments finis de la machine 1 suivant l'invention comprenant différents nombres N-1 d'empilements de rotors 2. On constate que le coefficient k et la puissance massique de la machine 1 sont doublés pour N=3 (point P1 sur la courbe C5) et plus que triplés pour N=9 (point P2 sur la courbe C5). La courbe C5 a été déterminée comme étant par exemple de la forme

$$k = B_{zN} / B_{z1} = A.\,(N.F)^D - C$$

Dans l'exemple précité de machine 1 suivant l'invention ayant les paramètres précités, $A=9.03T^{-1}.m^{-1}$, D=0.1372, C=5.15 et F=0.06m. Bien entendu, les coefficients A, D, C et F peuvent être autres pour d'autres valeurs des paramètres de la machine 1 suivant l'invention.

L'invention peut être utilisée pour les machines électriques 1 comprenant des barrières de flux (pastilles massives supraconductrices ou rubans court-circuités supraconducteurs).

Le domaine technique d'utilisation de l'invention s'inscrit dans le contexte de l'électrification des avions. La préparation à l'installation de systèmes électriques de plus en plus puissants pour la propulsion électrique ou hybride nécessite de concevoir des moteurs électriques capables de rivaliser, dépasser ou améliorer la performance des moteurs thermiques. L'avion électrique nécessitera des densités de puissance de machines électriques supérieures à 20 kW/kg. L'utilisation de matériaux supraconducteurs représente un outil clé pour atteindre ces densités de puissance. L'invention peut être utilisée pour les machines électriques comprenant des barrières 3 de flux (pastilles massives supraconductrices ou rubans court-circuités supraconducteurs). L'invention s'applique à des machines entièrement supraconductrices (induit 3 et inducteur 6 supraconducteurs) mais également à des machines partiellement supraconductrices (induit 3 ou inducteur 6 supraconducteur).

La machine électrique tournante 1 peut faire partie d'un aéronef et avoir les au moins deux bornes électriques extérieures des bobinages 7 d'induit qui sont connectées à un organe consommateur d'électricité ou à un organe générateur d'électricité. Cet organe consommateur ou générateur peut être situé par exemple dans une ou plusieurs turbomachines de propulsion de l'aéronef. Dans le cas où la machine électrique tournante 1 fonctionne en mode générateur d'électricité, la machine électrique tournante 1 peut avoir les au moins deux bornes électriques extérieures des bobinages 7 d'induit qui sont connectées à un organe consommateur d'électricité ou à un circuit de connexion (pouvant être par exemple avec commutation commandable) lui-même relié par des conducteurs électriques à un organe consommateur d'électricité, pour que la machine électrique tournante 1 génératrice d'électricité puisse alimenter en électricité cet organe consommateur. Dans le cas où la machine électrique tournante 1 fonctionne en mode moteur, la machine électrique tournante 1 peut avoir les au moins deux bornes électriques extérieures des bobinages 7 d'induit qui sont connectées à l'organe générateur d'électricité ou à un circuit de connexion (pouvant être par exemple avec commutation commandable) luimême relié par des conducteurs électriques à l'organe générateur d'électricité, pour que la machine électrique tournante 1 puisse être alimentée en électricité par cet organe générateur. Bien entendu, les modes de réalisation, caractéristiques, possibilités et exemples décrits cidessus peuvent être combinés l'un avec l'autre ou être sélectionnés indépendamment l'un de l'autre.

## Revendications

**1.** Machine électrique tournante (1), comportant : au moins un rotor (2) comprenant un ensemble d'éléments supraconducteurs (3) de barrière de flux magnétique axial répartis dans un plan perpendiculaire à l'axe (AX) de rotation suivant une direction tangentielle (DC) autour de l'axe (AX) de rotation, lesdits éléments supraconducteurs (3) de barrière de flux magnétique axial étant espacés par des zones (4) de passage de flux magnétique axial réparties suivant la direction tangentielle (DC) autour de l'axe (AX) de rotation, au moins un induit (5), comportant des bobinages (7) d'induit répartis suivant la direction tangentielle (DC) autour de l'axe (AX) de rotation, au moins une bobine inductrice (6) supraconductrice entourant les éléments supraconducteurs (3) de barrière de flux magnétique axial et le au moins un induit (5) suivant la direction tangentielle (DC) autour de l'axe (AX) de rotation, la au moins une bobine inductrice (6) supraconductrice étant apte à induire un champ magnétique axial dirigé suivant l'axe (AX) de rotation, le au moins un rotor (2) étant monté rotatif sur l'axe (AX) de rotation par rapport à l'induit (5) et à la au moins une bobine inductrice (6), la machine (1) comportant comme rotor (2, 21, 22, 23) au moins un premier rotor (21) et au moins un deuxième rotor (22, 23), le au moins un premier rotor (21) et le au moins un deuxième rotor (22, 23) étant espacés l'un de l'autre le long de l'axe (AX) de rotation, le au moins un induit (5) étant positionné entre le au moins un premier rotor (21) et le au moins un deuxième rotor (22, 23), les éléments supraconducteurs (3) de barrière de flux magnétique axial du au moins un premier rotor (21) étant coaxiaux au moins en partie avec les éléments supraconducteurs (3) de barrière de flux magnétique axial du au moins un deuxième rotor (22, 23), les zones (4) de passage de flux magnétique axial du au moins un premier rotor (21) étant coaxiales au moins en partie avec les zones (4) de passage de flux magnétique axial du au moins un deuxième rotor (22, 23), la machine électrique tournante (1) comportant une première enceinte cryogénique (11) de refroidissement, qui a une forme annulaire autour de l'axe (AX) de rotation et qui est délimitée radialement par une première paroi extérieure (111), **caractérisée en ce que** la première enceinte cryogénique (11) de refroidissement est délimitée radialement par une deuxième paroi intérieure annulaire (112), la au moins une bobine inductrice (6) supraconductrice se trouvant dans la première enceinte cryogénique (11) de refroidissement entre la première paroi extérieure (111) et la deuxième paroi intérieure annulaire (112), la machine comportant une deuxième enceinte cryogénique (12) de refroidissement, qui a une forme cylindrique circulaire autour de l'axe (AX) de rotation et qui est délimitée radialement par une troisième paroi extérieure (121) située à l'intérieur de la deuxième paroi intérieure annulaire (112), les rotors (2, 21, 22, 23) et le au moins un induit (5) se trouvant dans la deuxième enceinte cryogénique (12) de refroidissement.

**2.** Machine électrique tournante (1), comportant :

au moins un rotor (2) comprenant un ensemble d'éléments supraconducteurs (3) de barrière de flux magnétique axial répartis dans un plan perpendiculaire à l'axe (AX) de rotation suivant une direction tangentielle (DC) autour de l'axe (AX) de rotation, lesdits éléments supraconducteurs (3) de barrière de flux magnétique axial étant espacés par des zones (4) de passage de flux magnétique axial réparties suivant la direction tangentielle (DC) autour de l'axe (AX) de rotation, au moins un induit (5), comportant des bobinages (7) d'induit répartis suivant la direction tangentielle (DC) autour de l'axe (AX) de rotation, au moins une bobine inductrice (6) supraconductrice entourant les éléments supraconducteurs (3) de barrière de flux magnétique axial et le au moins un induit (5) suivant la direction tangentielle (DC) autour de l'axe (AX) de rotation, la au moins une bobine inductrice (6) supraconductrice étant apte à induire un champ magnétique axial dirigé suivant l'axe (AX) de rotation, le au moins un rotor (2) étant monté rotatif sur l'axe (AX) de rotation par rapport à l'induit (5) et à la au moins une bobine inductrice (6), la machine (1) comportant comme rotor (2, 21, 22, 23) au moins un premier rotor (21) et au moins un deuxième rotor (22, 23), le au moins un premier rotor (21) et le au moins un deuxième rotor (22, 23) étant espacés l'un de l'autre le long de l'axe (AX) de rotation, le au moins un induit (5) étant positionné entre le au moins un premier rotor (21) et le au moins un deuxième rotor (22, 23), les éléments supraconducteurs (3) de barrière de flux magnétique axial du au moins un premier rotor (21) étant coaxiaux au moins en partie avec les éléments supraconducteurs (3) de barrière de flux magnétique axial du au moins un deuxième rotor (22, 23), les zones (4) de passage de flux magnétique axial du au moins un premier rotor (21) étant coaxiales au moins en partie avec les zones (4) de passage de flux magnétique axial du au moins un deuxième rotor (22, 23), la machine électrique tournante comportant une première enceinte cryogénique (11) de refroidissement, qui a une forme annulaire autour de l'axe (AX) de rotation et qui est délimitée radialement par une première paroi extérieure (111), **caractérisée en ce que** une première enceinte cryogénique (11) de refroidissement est délimitée radialement par une deuxième paroi intérieure annulaire (112), la au moins une bobine inductrice (6) supraconductrice se trouvant dans la première enceinte cryogénique (11) de refroidissement entre la première paroi extérieure (111) et la deuxième paroi intérieure annulaire (112), la machine comportant au moins une deuxième enceinte cryogénique (13) de refroidissement, qui a une forme cylindrique circulaire autour de l'axe (AX) de rotation et qui est délimitée radialement par une troisième paroi extérieure (131) située à l'intérieur de la deuxième paroi intérieure annulaire (112), le au moins un premier rotor (21) se trouvant dans la deuxième enceinte cryogénique (13) de refroidissement,
la machine comportant au moins une troisième enceinte cryogénique (14) de refroidissement, qui a une forme cylindrique circulaire autour de l'axe (AX) de rotation, qui est située axialement à distance de la deuxième enceinte cryogénique (13) de refroidissement et qui est délimitée radialement par une quatrième paroi extérieure (141) située à l'intérieur de la deuxième paroi intérieure annulaire (112), le au moins un deuxième rotor (22, 23) se trouvant dans la troisième enceinte cryogénique (14) de refroidissement, le au moins un induit (5) étant situé entre la deuxième enceinte cryogénique (13) de refroidissement et la troisième enceinte cryogénique (14) de refroidissement.

**3.** Machine électrique tournante selon la revendication 1 ou 2, **caractérisée en ce que** le au moins un deuxième rotor (22) comporte de part et d'autre un induit (51, 52).

**4.** Machine électrique tournante selon la revendication 3, **caractérisée en ce qu'**elle comporte N rotors comportant de part et d'autre de chacun des rotors un induit, N étant un entier naturel supérieur ou égal à 2.

**5.** Machine électrique tournante selon l'une quelconque des revendications précédentes, **caractérisée en ce qu'**elle comporte N induits comportant de part et d'autre de chacun des induits un rotor, N étant un entier naturel supérieur ou égal à 2.

**6.** Machine électrique tournante suivant l'une quelconque des revendications précédentes, **caractérisée en ce que** les éléments supraconducteurs (3) de barrière de flux magnétique axial du au moins un premier rotor (21) sont alignés le long de l'axe (AX) de rotation avec les éléments supraconducteurs (3) de barrière de flux magnétique axial du au moins un deuxième rotor (22, 23), et les zones (4) de passage de flux magnétique axial du au moins un premier rotor (21) sont alignées le long de l'axe (AX) de rotation avec les zones (4) de passage de flux magnétique axial du au moins un deuxième rotor (22, 23).

**7.** Machine électrique tournante suivant l'une quelconque des revendications 1 et 3 à 6, lorsqu'elles dépendent de la revendication 1, **caractérisée en ce que** les bobinages (7) d'induit comportent au moins un bobinage d'induit supraconducteur.

**8.** Machine électrique tournante suivant l'une quelconque des revendications 2 et 3 à 6, lorsqu'elles dépendent de la revendication 2, **caractérisée en ce que** les bobinages (7) d'induit comportent au moins un bobinage conducteur et non supraconducteur.

**9.** Machine électrique tournante suivant l'une quelconque des revendications précédentes, **caractérisée en ce que** la au moins une bobine inductrice (6) supraconductrice possède une étendue axiale (L), qui entoure la pluralité des rotors (2, 21, 22, 23) et le au moins un induit (5) suivant la direction tangentielle (DC) autour de l'axe (AX) de rotation.

**10.** Machine électrique tournante suivant la revendication 7, **caractérisée en ce que** la machine comporte une seule bobine inductrice (6) supraconductrice.

**11.** Machine électrique tournante suivant l'une quelconque des revendications précédentes, **caractérisée en ce qu'**au moins un des éléments supraconducteurs (3) de barrière de flux magnétique axial comprend au moins une pastille pleine supraconductrice de barrière de flux magnétique axial.

**12.** Machine électrique tournante suivant l'une quelconque des revendications précédentes, **caractérisée en ce qu'**au moins un des éléments supraconducteurs (3) de barrière de flux magnétique axial comprend au moins une boucle supraconductrice de barrière de flux magnétique axial.

**13.** Machine électrique tournante suivant la revendication 2 ou l'une quelconque des revendications 3 à 12, lorsqu'elles dépendent de la revendication 2, **caractérisée en ce que** les bobinages (7) d'induit sont fixés sur un bouchon (35) de cryostat de la deuxième enceinte cryogénique (13) de refroidissement et/ou de la troisième enceinte cryogénique (14) de refroidissement en forme d'anneau autour de l'axe (AX), dont une face transversale comporte des encoches (36) dans lesquelles sont montés respectivement les bobinages (7) d'induit.

**14.** Aéronef, comportant un organe consommateur d'électricité ou générateur d'électricité et une machine électrique tournante (1) suivant l'une quelconque des revendications précédentes, qui est connectée à un circuit de connexion à l'organe consommateur d'électricité ou générateur d'électricité pour permettre de l'alimenter en électricité ou de lui fournir de l'électricité.

**Patentansprüche**

**1.** Drehende elektrische Maschine (1), aufweisend:

mindestens einen Rotor (2), der eine Anordnung supraleitender Barriereelemente (3) für den axialen Magnetfluss umfasst, die in einer Ebene senkrecht zur Drehachse (AX) gemäß einer tangentialen Richtung (DC) um die Drehachse (AX) verteilt sind,
wobei die supraleitenden Barriereelemente (3) für den axialen Magnetfluss durch Durchgangsbereiche (4) für den axialen Magnetfluss beabstandet sind, die gemäß der tangentialen Richtung (DC) um die Drehachse (AX) verteilt sind,
mindestens einen Anker (5) mit Ankerwicklungen (7), die gemäß der tangentialen Richtung (DC) um die Drehachse (AX) verteilt sind,
mindestens eine supraleitende Induktionsspule (6), die die supraleitenden Barriereelemente (3) für den axialen Magnetfluss und den mindestens einen Anker (5) gemäß der tangentialen Richtung (DC) um die Drehachse (AX) umgibt,
wobei die mindestens eine supraleitende Induktionsspule (6) imstande ist, ein axiales Magnetfeld zu induzieren, das gemäß der Drehachse (AX) ausgerichtet ist,
wobei der mindestens eine Rotor (2) auf der Drehachse (AX) relativ zum Anker (5) und zu der mindestens einen Induktionsspule (6) rotatorisch angebracht ist,
wobei die Maschine (1) als Rotor (2, 21, 22, 23) mindestens einen ersten Rotor (21) und mindestens einen zweiten Rotor (22, 23) aufweist,
wobei der mindestens eine erste Rotor (21) und der mindestens eine zweite Rotor (22, 23) entlang der Drehachse (AX) voneinander beabstandet sind,
wobei der mindestens eine Anker (5) zwischen dem mindestens einen ersten Rotor (21) und dem mindestens einen zweiten Rotor (22, 23) positioniert ist,
wobei die supraleitenden Barriereelemente (3) für den axialen Magnetfluss des mindestens einen ersten Rotors (21) mindestens teilweise koaxial zu den supraleitenden Barriereelementen (3) für den axialen Magnetfluss des mindestens einen zweiten Rotors (22, 23) sind,
wobei die Durchgangsbereiche (4) für den axialen Magnetfluss des mindestens einen ersten Rotors (21) mindestens teilweise koaxial zu den Durchgangsbereichen (4) für den axialen Magnetfluss des mindestens einen zweiten Rotors (22, 23) sind,
wobei die drehende elektrische Maschine (1) eine erste kryogene Kühlkammer (11) aufweist, die eine ringförmige Form um die Drehachse (AX) hat und die radial durch eine erste Außenwand (111) begrenzt ist,
**dadurch gekennzeichnet, dass**
die erste kryogene Kühlkammer (11) radial durch eine zweite ringförmige Innenwand (112) begrenzt ist, wobei sich die mindestens eine supraleitende Induktionsspule (6) in der ersten kryogenen Kühlkammer (11) zwischen der ersten Außenwand (111) und der zweiten ringförmigen Innenwand (112) befindet,
wobei die Maschine eine zweite kryogene Kühlkammer (12) aufweist, die eine kreiszylindrische Form um die Drehachse (AX) hat und die radial durch eine dritte Außenwand (121) begrenzt ist, die sich innerhalb der zweiten ringförmigen Innenwand (112) befindet, wobei sich die Rotoren (2, 21, 22, 23) und der mindestens eine Anker (5) in der zweiten kryogenen Kühlkammer (12) befinden.

**2.** Drehende elektrische Maschine (1), aufweisend:

mindestens einen Rotor (2), der eine Anordnung supraleitender Barriereelemente (3) für den axialen Magnetfluss umfasst, die in einer Ebene senkrecht zur Drehachse (AX) gemäß einer tangentialen Richtung (DC) um die Drehachse (AX) verteilt sind,
wobei die supraleitenden Barriereelemente (3) für den axialen Magnetfluss durch Durchgangsbereiche (4) für den axialen Magnetfluss beabstandet sind, die gemäß der tangentialen Richtung (DC) um die Drehachse (AX) verteilt sind,
mindestens einen Anker (5) mit Ankerwicklungen (7), die gemäß der tangentialen Richtung (DC) um die Drehachse (AX) verteilt sind,
mindestens eine supraleitende Induktionsspule (6), die die supraleitenden Barriereelemente (3) für den axialen Magnetfluss und den mindestens einen Anker (5) gemäß der tangentialen Richtung (DC) um die Drehachse (AX) umgibt, wobei die mindestens eine supraleitende Induktionsspule (6) imstande ist, ein axiales Magnetfeld zu induzieren, das gemäß der Drehachse (AX) ausgerichtet ist,
wobei der mindestens eine Rotor (2) auf der Drehachse (AX) relativ zum Anker (5) und zu der mindestens einen Induktionsspule (6) rotatorisch angebracht ist,
wobei die Maschine (1) als Rotor (2, 21, 22, 23) mindestens einen ersten Rotor (21) und mindestens einen zweiten Rotor (22, 23) aufweist, wobei der mindestens eine erste Rotor (21) und der mindestens eine zweite Rotor (22, 23) entlang der Drehachse (AX) voneinander beabstandet sind,
wobei der mindestens eine Anker (5) zwischen dem mindestens einen ersten Rotor (21) und dem mindestens einen zweiten Rotor (22, 23) positioniert ist,
wobei die supraleitenden Barriereelemente (3) für den axialen Magnetfluss des mindestens einen ersten Rotors (21) mindestens teilweise koaxial zu den supraleitenden Barriereelementen (3) für den axialen Magnetfluss des mindestens einen zweiten Rotors (22, 23) sind,
wobei die Durchgangsbereiche (4) für den axialen Magnetfluss des mindestens einen ersten Rotors (21) mindestens teilweise koaxial zu den Durchgangsbereichen (4) für den axialen Magnetfluss des mindestens einen zweiten Rotors (22, 23) sind,
wobei die drehende elektrische Maschine (1) eine erste kryogene Kühlkammer (11) aufweist, die eine ringförmige Form um die Drehachse (AX) hat und die radial durch eine erste Außenwand (111) begrenzt ist,
**dadurch gekennzeichnet, dass**
die erste kryogene Kühlkammer (11) radial durch eine zweite ringförmige Innenwand (112) begrenzt ist, wobei sich die mindestens eine supraleitende Induktionsspule (6) in der ersten kryogenen Kühlkammer (11) zwischen der ersten Außenwand (111) und der zweiten ringförmigen Innenwand (112) befindet,
wobei die Maschine mindestens eine zweite kryogene Kühlkammer (13) aufweist, die eine kreiszylindrische Form um die Drehachse (AX) hat und die radial durch eine dritte Außenwand (131) begrenzt ist, die sich innerhalb der zweiten ringförmigen Innenwand (112) befindet, wobei sich der mindestens eine erste Rotor (21) in der zweiten kryogenen Kühlkammer (13) befindet,
wobei die Maschine mindestens eine dritte kryogene Kühlkammer (14) aufweist, die eine kreiszylindrische Form um die Drehachse (AX) hat, die sich axial beabstandet von der zweiten kryogenen Kühlkammer (13) befindet und die radial durch eine vierte Außenwand (141) begrenzt ist, die sich innerhalb der zweiten ringförmigen Innenwand (112) befindet, wobei sich der mindestens eine zweite Rotor (22, 23) in der dritten kryogenen Kühlkammer (14) befindet,
wobei sich der mindestens eine Anker (5) zwischen der zweiten kryogenen Kühlkammer (13) und der dritten kryogenen Kühlkammer (14) befindet.

**3.** Drehende elektrische Maschine nach Anspruch 1 oder 2, **dadurch gekennzeichnet, dass** der mindestens eine zweite Rotor (22) auf beiden Seiten einen Anker (51, 52) aufweist.

**4.** Drehende elektrische Maschine nach Anspruch 3, **dadurch gekennzeichnet, dass** sie N Rotoren aufweist, die auf beiden Seiten von jedem der Rotoren einen Anker aufweisen, wobei N eine natürliche Ganzzahl größer oder gleich 2 ist.

**5.** Drehende elektrische Maschine nach einem beliebigen der vorhergehenden Ansprüche, **dadurch gekennzeichnet, dass** sie N Anker aufweist, die auf beiden Seiten von jedem der Anker einen Rotor aufweisen, wobei N eine natürliche Ganzzahl größer oder gleich 2 ist.

**6.** Drehende elektrische Maschine nach einem beliebigen der vorhergehenden Ansprüche, **dadurch gekennzeichnet, dass** die supraleitenden Barriereelemente (3) für den axialen Magnetfluss des mindestens einen ersten Rotors (21) entlang der Drehachse (AX) mit den supraleitenden Barriereelementen (3) für den axialen Magnetfluss des mindestens einen zweiten Rotors (22, 23) ausgerichtet sind, und die Durchgangsbereiche (4) für den axialen Magnetfluss des mindestens einen ersten Rotors (21) entlang der Drehachse (AX) mit den Durchgangsbereichen (4) für den axialen Magnetfluss des mindestens einen zweiten Rotors (22, 23) ausgerichtet sind.

**7.** Drehende elektrische Maschine nach einem beliebigen der Ansprüche 1 und 3 bis 6, wenn sie von Anspruch 1 abhängen, **dadurch gekennzeichnet, dass** die Ankerwicklungen (7) mindestens eine supraleitende Ankerwicklung aufweisen.

**8.** Drehende elektrische Maschine nach einem beliebigen der Ansprüche 2 und 3 bis 6, wenn sie von Anspruch 2 abhängen, **dadurch gekennzeichnet, dass** die Ankerwicklungen (7) mindestens eine leitende und nicht supraleitende Wicklung aufweisen.

**9.** Drehende elektrische Maschine nach einem beliebigen der vorhergehenden Ansprüche, **dadurch gekennzeichnet, dass** die mindestens eine supraleitende Induktionsspule (6) eine axiale Ausdehnung (L) aufweist, die die Mehrzahl der Rotoren (2, 21, 22, 23) und den mindestens einen Anker (5) gemäß der tangentialen Richtung (DC) um die Drehachse (AX) herum umgibt.

**10.** Drehende elektrische Maschine nach Anspruch 7, **dadurch gekennzeichnet, dass** die Maschine eine einzige supraleitende Induktionsspule (6) aufweist.

**11.** Drehende elektrische Maschine nach einem beliebigen der vorhergehenden Ansprüche, **dadurch gekennzeichnet, dass** mindestens eins der supraleitenden Barriereelemente (3) für den axialen Magnetfluss mindestens einen supraleitenden massiven Barrierekern für den axialen Magnetfluss umfasst.

**12.** Drehende elektrische Maschine nach einem beliebigen der vorhergehenden Ansprüche, **dadurch gekennzeichnet, dass** mindestens eins der supraleitenden Barriereelemente (3) für den axialen Magnetfluss mindestens eine supraleitende Barriereschleife für den axialen Magnetfluss umfasst.

**13.** Drehende elektrische Maschine nach Anspruch 2 oder einem beliebigen der Ansprüche 3 bis 12, wenn sie von Anspruch 2 abhängig sind, **dadurch gekennzeichnet, dass** die Ankerwicklungen (7) auf einem Kryostatenstopfen (35) der zweiten kryogenen Kammer (13) und/oder der dritten kryogenen Kammer (14) ringförmig um die Achse (AX) befestigt sind, wobei eine Querseite des Kryostatenstopfen (35) Kerben (36) aufweist, in denen jeweils die Ankerwicklungen (7) angebracht sind.

**14.** Luftfahrzeug, das ein Stromverbraucher- oder Stromerzeugungselement und eine drehende elektrische Maschine (1) nach einem beliebigen der vorstehenden Ansprüche umfasst, die mit einem Verbindungsstromkreis mit dem Stromverbraucher- oder Stromerzeugungselement verbunden ist, um es mit Strom zu versorgen oder ihm Strom zuzuführen.

## Claims

**1.** A rotating electric machine (1), comprising:

at least one rotor (2) comprising a set of superconducting axial magnetic flux barrier elements (3) distributed in a plane perpendicular to the axis of rotation (AX) in a tangential direction (DC) about the axis of rotation (AX),
said superconducting axial magnetic flux barrier elements (3) being spaced by axial magnetic flux passage areas (4) distributed in the tangential direction (DC) about the axis of rotation (AX),
at least one armature (5), comprising armature windings (7) distributed in the tangential direction (DC) about the axis of rotation (AX),
at least one superconducting inductor coil (6) surrounding the superconducting axial magnetic flux barrier elements (3) and the at least one armature (5) in the tangential direction (DC) about the axis of rotation (AX),
the at least one superconducting inductor coil (6) being able to induce an axial magnetic field directed along the axis of rotation (AX),
the at least one rotor (2) being rotatably mounted on the axis of rotation (AX) with respect to the armature (5) and to the at least one inductor coil (6),
the machine (1) comprising as a rotor (2, 21, 22, 23) at least one first rotor (21) and at least one second rotor (22, 23),
the at least one first rotor (21) and the at least one second rotor (22, 23) being spaced from each other along the axis of rotation (AX),
the at least one armature (5) being positioned between the at least one first rotor (21) and the at least one second rotor (22, 23),
the superconducting axial magnetic flux barrier elements (3) of the at least one first rotor (21) being coaxial at least partly with the superconducting axial magnetic flux barrier elements (3) of the at least one second rotor (22, 23),
the axial magnetic flux passage areas (4) of the at least one first rotor (21) being coaxial at least partly with the axial magnetic flux passage areas (4) of the at least one second rotor (22, 23),
the rotating electric machine (1) comprising a first cryogenic cooling enclosure (11), which has an annular shape about the axis of rotation (AX) and which is delimited radially by a first external wall (111),
**characterized in that**
the first cryogenic cooling enclosure (11) is delimited radially by a second internal annular wall (112), the at least one superconducting inductor coil (6) being located in the first cryogenic cooling enclosure (11) between the first external wall (111) and the second internal annular wall (112), the machine comprising a second cryogenic cooling enclosure (12), which has a circular cylindrical shape about the axis of rotation (AX) and which is delimited radially by a third external wall (121) located inside the second internal annular wall (112), the rotors (2, 21, 22, 23) and the at least one armature (5) being located in the second cryogenic cooling enclosure (12).

**2.** A rotating electric machine (1), comprising:

at least one rotor (2) comprising a set of superconducting axial magnetic flux barrier elements (3) distributed in a plane perpendicular to the axis of rotation (AX) in a tangential direction (DC) about the axis of rotation (AX),
said superconducting axial magnetic flux barrier elements (3) being spaced by axial magnetic flux passage areas (4) distributed in the tangential direction (DC) about the axis of rotation (AX),
at least one armature (5), comprising armature windings (7) distributed in the tangential direction (DC) about the axis of rotation (AX),
at least one superconducting inductor coil (6) surrounding the superconducting axial magnetic flux barrier elements (3) and the at least one armature (5) in the tangential direction (DC) about the axis of rotation (AX),
the at least one superconducting inductor coil (6) being able to induce an axial magnetic field directed along the axis of rotation (AX),
the at least one rotor (2) being rotatably mounted on the axis of rotation (AX) with respect to the armature (5) and to the at least one inductor coil (6),
the machine (1) comprising as a rotor (2, 21, 22, 23) at least one first rotor (21) and at least one second rotor (22, 23),
the at least one first rotor (21) and the at least one second rotor (22, 23) being spaced from each other along the axis of rotation (AX),
the at least one armature (5) being positioned between the at least one first rotor (21) and the at least one second rotor (22, 23),
the superconducting axial magnetic flux barrier elements (3) of the at least one first rotor (21) being coaxial at least partly with the superconducting axial magnetic flux barrier elements (3) of the at least one second rotor (22, 23),
the axial magnetic flux passage areas (4) of the at least one first rotor (21) being coaxial at least partly with the axial magnetic flux passage areas (4) of the at least one second rotor (22, 23),
the rotating electric machine comprising a first cryogenic cooling enclosure (11), which has an annular shape about the axis of rotation (AX) and which is delimited radially by a first external wall (111),
**characterized in that**
the cryogenic cooling enclosure (11) which is delimited radially by a second internal annular wall (112), the at least one superconducting inductor coil (6) being located in the first cryogenic cooling enclosure (11) between the first external wall (111) and the second internal annular wall (112),
the machine comprising at least one second cryogenic cooling enclosure (13), which has a circular cylindrical shape about the axis of rotation (AX) and which is delimited radially by a third external wall (131) located inside the second internal annular wall (112), the at least one first rotor (21) being located in the second cryogenic cooling enclosure (13),
the machine comprising at least one third cryogenic cooling enclosure (14), which has a circular cylindrical shape about the axis of rotation (AX), which is located axially at a distance from the second cryogenic cooling enclosure (13) and which is delimited radially by a fourth external wall (141) located inside the second internal annular wall (112), the at least one second rotor (22, 23) being located in the third cryogenic cooling enclosure (14),
the at least one armature (5) being located between the second cryogenic cooling enclosure (13) and the third cryogenic cooling enclosure (14).

3. The rotating electric machine according to claim 1 or 2, **characterized in that** the at least one second rotor (22) comprises an armature (51, 52) on either side.

4. The rotating electric machine according to claim 3, **characterized in that** it comprises N rotors comprising on either side of each of the rotors an armature, N being a natural number greater than or equal to 2.

5. The rotating electric machine according to any one of the preceding claims, **characterized in that** it comprises N armatures comprising on either side of each of the armatures a rotor, N being a natural integer greater than or equal to 2.

6. The rotating electric machine according to any one of the preceding claims, **characterized in that** the superconducting axial magnetic flux barrier elements (3) of the at least one first rotor (21) are aligned along the axis of rotation (AX) with the superconducting axial magnetic flux barrier elements (3) of the at least one second rotor (22, 23), and
the axial magnetic flux passage areas (4) of the at least one first rotor (21) are aligned along the axis of rotation (AX) with the axial magnetic flux passage areas (4) of the at least one second rotor (22, 23).

7. The rotating electric machine according to any one of claims 1 and 3 to 6, when they depend on claim 1, **characterized in that** the armature windings (7) comprise at least one superconducting armature winding.

8. The rotating electric machine according to any one of claims 2 and 3 to 6, when they depend on claim 2, **characterized in that** the armature windings (7) comprise at least one conductive winding not superconducting.

**9.** The rotating electric machine according to any one of the preceding claims, **characterized in that** the at least one superconducting inductor coil (6) has an axial extent (L), which surrounds the plurality of the rotors (2, 21, 22, 23) and the at least one armature (5) in the tangential direction (DC) about the axis of rotation (AX).

**10.** The rotating electric machine according to claim 7, **characterized in that** the machine comprises a single superconducting inductor coil (6).

**11.** The rotating electric machine according to any one of the preceding claims, **characterized in that** at least one of the superconducting axial magnetic flux barrier elements (3) comprises at least one full superconducting axial magnetic flux barrier pad.

**12.** The rotating electric machine according to any one of the preceding claims, **characterized in that** at least one of the superconducting axial magnetic flux barrier elements (3) comprises at least one superconducting axial magnetic flux barrier loop.

**13.** The rotating electric machine according to claim 2 or any one of claims 3 to 12, when they depend on claim 2, **characterized in that** the armature windings (7) are fixed on a cryostat cap (35) of the second cryogenic cooling enclosure (13) and/or of the third cryogenic cooling enclosure (14) in the form of a ring about the axis (AX),
one transverse face of the cryostat cap (35) comprises notches (36) in which the armature windings are respectively mounted (7).

**14.** An aircraft, comprising an electricity-consuming member or an electricity-generating member and a rotating electric machine (1) according to any one of the preceding claims, which is connected to a circuit for connection to the electricity-consuming member or to the electricity-generating member to allow supplying it or providing it with electricity.

DC
7
5
7
3
6
31
L
2,22
7
31
3
7
8
4
4
4
4
4
33
31
2,21
9
AX
P
3
31
1

FIG. 1

1
33
31
3
2,21
9
4
AX
3
31
4
P
31
3
31
3
4
4
31
3
33
5
7
7
3
31
DC
6
8
L
AX
5,51
2,22
5,52
2,23
7

FIG. 2

F1
B
F2
4
8
2
3
6
1
30
AX

FIG. 3

FIG. 4

(T)
5.43
5.15
4.87
4.59
4.32
4.04
3.76
3.48
3.2
2.92
2.65
2.37
2.09
1.81
1.53
1.25
0.97
0.7
0.42
0.14
ATTB
32
B3
B4
34
B2
B1
31
3
4
B5
33
AX
VB
VB
ECH1
AX

2.22
(T)
2.22
2.07
1.91
1.76
1.61
1.45
1.3
1.15
0.99
0.84
0.69
0.54
0.38
0.23
0
4.79x10-10
ECH2
71
74
72
73
ECRAN
8
7
ECRAN
8
AX
(m)
0.05
0
-0.05
(m)
0.07
0.06
0.05
0.04
0.03
0.02
0.01
0
-0.01
-0.02
-0.03
-0.04
-0.05
-0.06
-0.07


FIG. 5

2.37
(T)
2.37
2.21
2.04
1.88
1.72
1.55
1.39
1.23
1.06
0.9
0.74
0.57
0.41
0.25
0
8.08x10-10
ECH3
74''
71'
72'
74'
7'
ECRAN
7'
73''
73'
AX
(m)
0.05
0
-0.05
(m)
0.06
0.05
0.04
0.03
0.02
0.01
0
-0.01
-0.02
-0.03
-0.04
-0.05
-0.06

FIG. 6

FIG. 7

2
1.5
1
0.5
0
$B_Z$ (T)
C2
C1
C2
C1
C2
C1
0
0.2
0.4
0.6
0.8
1
1.2
Angle (rad)

FIG. 8

1.5
1
0.5
0
$B_Z$ (T)
C3
C4
C3
C4
C4
C3
0
0.2
0.4
0.6
0.8
1
1.2
Angle (rad)

FIG. 9

J
R2
R1
Hd
M
S

FIG. 10
k
4,5
4
3,5
3
2,5
2
1,5
1
1
2
3
4
5
6
7
8
9
10
11
16
(N-1)
Nombre d'empilements
C5
P1
P2
$B_{Z,N} / B_{Z,1} = A \cdot (N.L)^{B} - C$
$A=9{,}03\ T^{-1}.m^{-1}$, $B=0{,}1372$, $C=5{,}15$, $L=0{,}06\ m$

FIG. 11

70
77
7
70
36
70
7
36
70
AX
76
70
70
35
76
70
36
36
7
7
77
5

AX
5
2
6
10
1

FIG. 13

FIG. 12

AX
121
2
12
5
114
6
121
12
1
11
112
111

FIG. 15

113
6
121
22
2
121
6
111
11
5
111
AX
114
112
21
12
2
112
11
1

FIG. 14

FIG. 17
AX
2
5
114
6
131
13
1
11
112
111

FIG. 16
111
11
5
113
6
141
22
14
2
AX
131
112
21
13
114
1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2037558 A
- EP 2611007 A


### Littérature non-brevet citée dans la description


- Topical Review; An overview of rotating machine systems with high-temperature bulk superconductors. **DIFAN ZHOU et al.** SUPERCONDUCTOR SCIENCE AND TECHNOLOGY. IOP PUBLISHING, 08 August 2012, vol. 25, 103001
- **COLLE ALEXANDRE et al.** *Analytical Model for the Magnetic Field Distribution in a Flux Modulation Superconducting Machine*, 12 December 2019, vol. 55 (12), 1-9
- Design of HTS Axial Flux Motor for Aircraft Propulsion. **MASSON P J et al.** IEEE TRANSACTIONS ON APPLIED SUPERCONDUCTIVITY. IEEE SERVICE CENTER, 02 June 2007, vol. 17, 1533-1536